# EUROPÄISCHE PATENTSCHRIFT

(11) **EP 4 058 765 B1**
(45) Veröffentlichungstag und Bekanntmachung des Hinweises auf die Patenterteilung: **15.04.2026**
(21) Anmeldenummer: 20804267.1
(22) Anmeldetag: 10.11.2020
(51) Int. Cl.: G01K 11/12, G01K 13/02, G01L 11/02, G01L 13/02, G01P 5/20

(54) **VERFAHREN ZUM ERMITTELN EINES ISTWERTS UND/ODER EINES ISTWERTBEREICHS WENIGSTENS EINER ZUSTANDSGRÖSSE EINES FLUIDS IN EINER FLUIDSTRÖMUNG MITTELS WENIGSTENS EINES INDIKATORPARTIKELS, VERFAHREN ZUM BETREIBEN EINER FLUIDFÜHRENDEN EINRICHTUNG SOWIE EINRICHTUNG ZUM ERMITTELN DES ISTWERTS DER WENIGSTENS EINEN ZUSTANDSGRÖSSE.**
METHOD OF DETERMINING AN ACTUAL VALUE AND/OR AN ACTUAL VALUE RANGE OF AT LEAST ONE STATE VARIABLE OF A FLUID IN A FLUID FLOW BY MEANS OF AT LEAST ONE INDICATOR PARTICLE, METHOD OF OPERATING A FLUID CARRYING SYSTEM AND SYSTEM FOR DETERMINING THE ACTUAL VALUE OF THE AT LEAST ONE STATE VARIABLE
PROCÉDÉ DE DÉTERMINATION D'UNE VALEUR RÉELLE ET/OU D'UNE PLAGE DE VALEURS RÉELLES D'AU MOINS UNE VARIABLE D'ÉTAT D'UN FLUIDE DANS UN ÉCOULEMENT DE FLUIDE AU MOYEN D'AU MOINS UNE PARTICULE INDICATRICE, PROCÉDÉ DE EXPLOITATION D'UN SYSTÈME DE TRANSPORT DE FLUIDE ET SYSTÈME DE DÉTERMINATION D'AU MOINS UNE VARIABLE D'ÉTAT

(30) Priorität: 12.11.2019 DE 102019217470
(43) Veröffentlichungstag der Anmeldung: 21.09.2022
(73) Patentinhaber: Universität Stuttgart, 70174 Stuttgart (DE)
(72) Erfinder: MEHRING, Carsten, 72202 Nagold (DE)
(74) Vertreter: Dietz, Christopher Friedrich
(86) Internationale Anmeldenummer: PCT/EP2020/081631
(87) Internationale Veröffentlichungsnummer: WO 2021/094307

(56) Entgegenhaltungen:
- US-A1- 2002 044 590
- US-A1- 2013 122 301

## Beschreibung

Die Erfindung betrifft ein Verfahren zum Ermitteln eines Istwerts und/oder eines Istwertbereichs wenigstens einer Zustandsgröße eines Fluids in einer Fluidströmung mittels wenigstens eines in das Fluid eingebrachten Indikatorpartikels, wobei der wenigstens eine Indikatorpartikel für eine irreversible Eigenschaftsänderung einer Indikatoreigenschaft des Indikatorpartikels bei Vorliegen eines bestimmten Indikatorwerts der wenigstens einen Zustandsgröße in der Fluidströmung, und/oder als eindeutige Funktion von dem Istwert bei Ablauf einer bestimmten Zeitspanne nach dem Einbringen des Indikatorpartikels in das Fluid vorgesehen und ausgebildet ist, wobei der Indikatorpartikel an einer Erfassungsstelle erfasst, die Indikatoreigenschaft des Indikatorpartikels ausgewertet und aus der Indikatoreigenschaft auf den Istwert und/oder den Istwertbereich der Zustandsgröße stromaufwärts der Erfassungsstelle geschlossen wird. Die Erfindung betrifft weiterhin ein Verfahren zum Betreiben einer fluidführenden Einrichtung sowie eine Einrichtung zum Ermitteln des Istwerts und/oder des Istwertbereichs der wenigstens einen Zustandsgröße.

Aus dem Stand der Technik ist beispielsweise die Druckschrift GB 2510862 A bekannt. Diese beschreibt eine auf bildgebenden Verfahren beruhende Geschwindigkeitsmessung. Dabei kommt das sogenannte Defocused Digital Particle Image Velocimetry-Verfahren (DDPIV-Verfahren) zum Einsatz. Dieses umfasst das Einbringen von Partikeln in ein Fluid, wobei an einer Messstelle die Partikel erfasst und zum Ermitteln eines Geschwindigkeitsfelds des Fluids herangezogen werden. Um zusätzlich eine Temperatur des Fluids an der Messstelle zu ermitteln, können dem Fluid Thermoflüssigkristalle zugesetzt werden.

Weiterhin offenbart die Druckschrift US 2002/0044590 A1 ein Verfahren zum Erzeugen einer Temperaturmessung für eine Charge oder einen kontinuierlichen Strom von Material, wobei das Verfahren umfasst: (a) Bereitstellen eines Teilchens mit einem Signal, das sich bei einer vorbestimmten Temperatur ändert; (b) Einführen des in Schritt (a) bereitgestellten Teilchens in die Charge oder den kontinuierlichen Strom; und (c) Erfassen einer Signaländerung von dem Teilchen, um dadurch eine Temperaturmessung für die Charge oder den kontinuierlichen Strom zu erzeugen.

Die Druckschrift US 2013/0122301 A1 zeigt zudem einen druckempfindlichen Indikatorpartikel, mittels welchem eine Zustandsgröße eines Fluidstroms ermittelt werden kann.

Es ist Aufgabe der Erfindung, ein Verfahren zum Ermitteln des Istwerts und/oder des Istwertbereichs der wenigstens einen Zustandsgröße des Fluids in der Fluidströmung vorzuschlagen, welches gegenüber bekannten Verfahren Vorteile aufweist, insbesondere auch für solche Stellen oder Bereiche einer fluidführenden Einrichtung Erkenntnisse über die Zustandsgröße ermöglicht, welche für eine direkte Messung an diesen Stellen beziehungsweise in diesen Bereichen nicht zugänglich sind.

Dies wird erfindungsgemäß mit einem Verfahren zum Ermitteln des Zielwerts der wenigstens einen Zustandsgröße des Fluids mit den Merkmalen des Anspruchs 1 erreicht. Dabei ist vorgesehen, dass der Indikatorpartikel für eine irreversible Eigenschaftsänderung einer Indikatoreigenschaft des Indikatorpartikels bei Vorliegen eines bestimmten Indikatorwerts der wenigstens einen Zustandsgröße in der Fluidströmung vorgesehen und ausgebildet ist, wobei die Zustandsgröße eine Normalspannung und/oder eine Scherspannung des Fluids ist und der Indikatorpartikel einen Grundkörper mit einer einen Hohlraum einschließenden Partikelhülle aufweist, wobei in dem Hohlraum ein Referenzdruck vorliegt und die Partikelhülle dazu vorgesehen und ausgebildet ist, bei einem Abweichen der Normalspannung von dem Referenzdruck um eine bestimmte Druckdifferenz die Indikatoreigenschaft in Gestalt ihrer Form irreversibel zu ändern und/oder zu reißen, und/oder wobei die Partikelhülle dazu vorgesehen und ausgebildet ist, bei einem Abweichen der Scherspannung von einer Referenzspannung die Indikatoreigenschaft in Gestalt ihrer Form irreversibel zu ändern und/oder zu reißen, und/oder dass der Indikatorpartikel für eine irreversible Eigenschaftsänderung einer Indikatoreigenschaft des Indikatorpartikels als eindeutige Funktion von dem Istwert bei Ablauf einer bestimmten Zeitspanne nach einem Einbringen des Indikatorpartikels in das Fluid vorgesehen und ausgebildet ist, wobei auf dem Grundkörper ein die Indikatoreigenschaft bereitstellendes Sensormaterial vorliegt, das zustandsgrößensensibel ist, wobei der Grundkörper von einer Schutzhülle abgedeckt ist, sodass der Grundkörper beziehungsweise das Sensormaterial erst bei Ablauf der bestimmten Zeitspanne nach dem Einbringen in das Fluid dem Fluid ausgesetzt ist.

Das Verfahren wird beispielsweise zum Betreiben einer Einrichtung zum Ermitteln des Istwerts beziehungsweise des Istwertbereichs und/oder zum Betreiben einer fluidführenden Einrichtung herangezogen, insbesondere zur Steuerung und/oder Regelung der Einrichtung. Im Rahmen des Verfahrens soll der Istwert und/oder der Istwertbereich der Zustandsgröße ermittelt werden, nämlich an einer Stelle, welche stromaufwärts der eigentlichen Erfassungsstelle liegt. Diejenige Stelle oder derjenige Bereich, an welcher beziehungsweise in welchem der Istwert und/oder der Istwertbereich ermittelt wird beziehungsweise ermittelt werden soll, kann auch als Untersuchungsstelle beziehungsweise als Untersuchungsbereich bezeichnet werden.

Unter dem Istwert ist der tatsächliche Wert der Zustandsgröße an der Untersuchungsstelle zu verstehen. Der Istwertbereich hingegen beschreibt einen Bereich, in welchem der Istwert liegt. Der Istwertbereich kann ein geschlossenes oder halbgeschlossenes mathematisches Intervall sein. Der Istwertbereich ist also entweder beidseitig oder lediglich einseitig geschlossen beziehungsweise von einem jeweiligen Grenzwert begrenzt. Im Falle des geschlossenen Intervalls ist der Istwertbereich einerseits, beispielsweise nach unten, von einem ersten Grenzwert und andererseits, beispielsweise nach oben, von einem zweiten Grenzwert begrenzt, wobei der erste Grenzwert und der zweite Grenzwert voneinander verschieden sind. Im Falle des halboffenen Intervalls ist der Istwertbereich lediglich von dem ersten Grenzwert oder dem zweiten Grenzwert begrenzt und in Richtung des jeweils anderen Grenzwerts offen. Die Verwendung des Istwertbereichs ermöglicht ein Eingrenzen des Istwerts auf einen bestimmten Bereich. Bereits an dieser Stelle sei darauf hingewiesen, dass falls im Rahmen dieser Beschreibung von dem Istwert gesprochen wird, stets zusätzlich oder alternativ der Istwertbereich gemeint ist, auch wenn er nicht explizit erwähnt ist.

Das Ermitteln des Istwerts und/oder des Istwertbereichs erfolgt grundsätzlich mithilfe des wenigstens einen Indikatorpartikels. Dieser wird in das Fluid eingebracht, nämlich an einer Einbringungsstelle, welche in der Fluidströmung stromaufwärts der Untersuchungsstelle liegt. Der Indikatorpartikel durchläuft die Fluidströmung entlang einer Bahnlinie ausgehend von der Einbringungsstelle über die Untersuchungsstelle bis hin zu der Erfassungsstelle, an welcher die Auswertung des Indikatorpartikels erfolgt. Da die Bahnlinie des Indikatorpartikels in der Fluidströmung und dessen zeitabhängige Position entlang der Bahnlinie nach seiner Einbringung in die Fluidströmung zunächst nicht bekannt sind, kann es vorgesehen sein, die Bahnlinie mittels geeigneter Methoden zu ermitteln, um die Untersuchungsstelle örtlich zu ermitteln. Anschließend kann der Istwert und/oder der Istwertbereich der Untersuchungsstelle zugeordnet werden.

Sofern im Rahmen dieser Beschreibung von dem Indikatorpartikel die Rede ist, so sind die entsprechenden Ausführungen stets auf den wenigstens einen Indikatorpartikel übertragbar und umgekehrt. Dies gilt im Übrigen auch für die Zustandsgröße, wobei entsprechende Ausführungen auf die wenigstens eine Zustandsgröße zutreffen und umgekehrt. Die jeweiligen Ausführungen sind insoweit deckungsgleich. Ebenso können im Rahmen des Verfahrens mehrere Indikatorpartikel verwendet werden. In diesem Fall sind die Ausführungen für den Indikatorpartikel und den wenigstens einen Indikatorpartikel vorzugsweise jeweils auf mehrere der Indikatorpartikel oder jeden der mehreren Indikatorpartikel anwendbar.

Die entsprechenden Ausführungen können insoweit stets ergänzend und analog herangezogen werden.

Das Verfahren kann zum Ermitteln des Istwerts und/oder der Istwertbereichs genau einer Zustandsgröße oder zum Ermitteln von Istwerten und/oder Istwertbereichen mehrerer Zustandsgrößen herangezogen werden. In letzterem Fall sind die Ausführungen für die Zustandsgröße beziehungsweise die wenigstens eine Zustandsgröße vorzugsweise auf jede der mehreren Zustandsgrößen übertragbar. Der Indikatorpartikel ist in einer ersten Ausführungsform derart ausgestaltet, dass er bei bestimmten Eigenschaften des Fluids seine Indikatoreigenschaft ändert, also sobald die Zustandsgröße des Fluids den bestimmten Indikatorwert aufweist. Bei seinem Einbringen in das Fluid an der Einbringungsstelle weist der Indikatorpartikel insoweit eine bestimmte Eigenschaft auf, welche sich ändert, sobald der Indikatorpartikel in dem Fluid an eine Stelle gelangt, an welcher die Zustandsgröße den bestimmten Indikatorwert aufweist. Die sich ändernde Eigenschaft ist beispielsweise eine der folgenden Eigenschaften: Größe, Form, Gewicht, Farbe, Reflexionsgrad, Brechungsindex, Materialzusammensetzung, Materialstruktur oder dergleichen. Liegt also der Indikatorwert in dem Fluid entlang der Bahnlinie des Indikatorpartikels vor, so ändern sich die Größe, die Form, das Gewicht, die Farbe, der Reflexionsgrad, der Brechungsindex und/oder die Materialstruktur des Indikatorpartikels permanent und irreversibel. Selbstverständlich können sich mehrere der genannten Eigenschaften ändern, sobald die Zustandsgröße an der Stelle, an welcher der Indikatorpartikel momentan vorliegt, den Indikatorwert aufweist. Unter der Materialzusammensetzung ist eine Zusammensetzung des Materials zu verstehen, aus welchem der Indikatorpartikel zumindest bereichsweise besteht, insbesondere eine chemische Zusammensetzung. Die Materialstruktur beschreibt beispielsweise eine kristalline Struktur beziehungsweise Kristallstruktur des Indikatorpartikels beziehungsweise des Materials.

In einer zweiten Ausführungsform erfolgt die Änderung der Indikatoreigenschaft in Abhängigkeit oder anders ausgedrückt als eindeutige Funktion von dem Istwert und/oder dem Istwertbereich, nämlich bei Ablauf der bestimmten Zeitspanne nach dem Einbringen des Indikatorpartikels in das Fluid. Das bedeutet, dass die Indikatoreigenschaft nach dem Einbringen des Indikatorpartikels in das Fluid zunächst konstant bleibt, unabhängig von der Zustandsgröße des Fluids beziehungsweise ihrem Istwert und/oder Istwertbereich, nämlich über die bestimmte Zeitspanne hinweg. Erst bei dem Verstreichen der Zeitspanne, also an ihrem Ende, reagiert der Indikatorpartikel auf die Zustandsgröße, nämlich genau einmalig. Die Indikatoreigenschaft wird hierbei in Abhängigkeit beziehungsweise als eindeutige Funktion von der Zustandsgröße beziehungsweise ihrem Istwert und/oder Istwertbereich verändert und bleibt nachfolgend - bevorzugt - wiederum konstant. Die Zeitspanne wird beispielsweise mittels einer Schutzhülle des Indikatorpartikels realisiert. Der Indikatorpartikel ist dabei bevorzugt so ausgestaltet, dass die Änderung der Indikatoreigenschaft nach Ablauf der Zeitspanne in Abhängigkeit beziehungsweise als eindeutige Funktion des dann vorliegenden Istwertes der Zustandsgröße erfolgt. Selbstverständlich kann auch in einer Kombination der ersten Ausführungsform und der zweiten Ausführungsform vorgesehen sein, dass der Indikatorpartikel derart ausgestaltet ist, dass die Veränderung der Indikatoreigenschaft gemäß der ersten Ausführungsform bei Vorliegen des bestimmten Indikatorwerts der wenigstens einen Zustandsgröße in der Fluidströmung auftritt, wobei die Veränderung erst nach Ablauf der bestimmten Zeitspanne freigegeben wird.

Besonders bevorzugt kann es für eine dritten Ausführungsform des Indikatorpartikels, die im Übrigen bevorzugt auf der ersten Ausführungsform aufbaut und diese weiterbildet, vorgesehen sein, dass eine zeitlich progressiv über die Partikeloberfläche oder das Partikelvolumen ablaufende irreversible Eigenschaftsänderung des jeweiligen Oberflächenelements oder Volumenelements mit einer zustandsgrößenwertsensiblen Indikatoreigenschaft stattfindet. Hierbei kann vorgesehen sein, dass sich die Indikatoreigenschaft bei Vorliegen eines bestimmten Indikatorwerts ändert oder sich die Indikatoreigenschaft als in Abhängigkeit beziehungsweise eindeutige Funktion in Abhängigkeit von dem Istwert der Zustandsgröße im Fluid ändert. Beispielsweise ist es hierbei vorgesehen, dass auf dem Grundkörper mehrere Sensorelemente oder Sensorbereiche ausgebildet sind, wobei ein erster Teil der Sensorelemente beziehungsweise Sensorbereiche einen ersten Indikatorwert beziehungsweise eine erste Indikatoreigenschaft und ein zweiter Teil der Sensorelemente beziehungsweise Sensorbereiche einen von dem ersten Indikatorwert verschiedenen zweiten Indikatorwert beziehungsweise eine von der ersten Indikatoreigenschaft verschiedene zweite Indikatoreigenschaft aufweist. Soweit im Rahmen dieser Beschreibung von der Indikatoreigenschaft die Rede ist, so kann diese beispielsweise als Indikatorwert verstanden werden. Die erste Indikatoreigenschaft entspricht dann dem ersten Indikatorwert und die zweite Indikatoreigenschaft dem zweiten Indikatorwert. Beispielsweise besteht der erste Teil der Sensorelemente beziehungsweise Sensorbereiche aus einem Sensormaterial und der zweite Teil der Sensorelemente beziehungsweise Sensorbereiche aus einem von dem Sensormaterial verschiedenen Sensormaterial. Die Sensorelemente beziehungsweise Sensorbereiche können derart ausgestaltet sein, dass sie einer chemischen Oberflächenreaktion unterzogen werden, sobald sie mit dem Fluid in Kontakt kommen, insbesondere erfolgt eine istwertabhängige Oberflächenreaktion.

Selbstverständlich kann eine beliebige Anzahl von Teilen beziehungsweise Bereichen realisiert sein, die sich hinsichtlich ihrer Indikatoreigenschaften unterscheiden. Beispielsweise sind die Teile oder Bereiche derart ausgestaltet, dass sie dieselbe Indikatoreigenschaft aufweisen, die Eigenschaftsänderung jedoch nach unterschiedlicher Expositionszeit abläuft. Das bedeutet, dass entlang der Bahnlinie in der Fluidströmung die Eigenschaftsänderungen der Teile oder Bereiche zu unterschiedlichen Zeitpunkten ablaufen und zwar in Abhängigkeit des Indikatorwertes oder als eindeutige Funktion des Istwerts der Zustandsgröße im Fluid zum jeweiligen Zeitpunkt. Beim Erfassen des Indikatorpartikels kann damit ermittelt werden zu welchem Zeitpunkt bzw. wo auf der Bahnlinie des Indikatorpartikels der ermittelte Istwert der Zustandsgröße vorlag, bzw. auf welchem Anteil der Bahnlinie beziehungsweise in welchen Zeitraum der Indikatorpartikel dem vom Indikatorwert begrenzten Istwertbereich ausgesetzt war.

Die Häufigkeit, mit welcher Änderungen der Indikatoreigenschaft der unterschiedlichen Sensorelemente beziehungsweise Sensorbereiche zeitlich wahrgenommen werden, kann als Progressionsrate bezeichnet werden. In jedem Fall kann es - jedoch rein optional - vorgesehen sein, dass die Sensorelemente beziehungsweise Sensorbereiche von der Schutzhülle mit voneinander verschiedenen Hüllstärken abgedeckt sind, sodass die Progressionsrate letztlich von der Schutzhülle beziehungsweise ihrer Hüllstärken bestimmt ist.

Die Änderung der Eigenschaft erfolgt irreversibel, das bedeutet, dass ein einmaliges Vorliegen des bestimmten Indikatorwerts der Zustandsgröße und/oder das Ablaufen der Zeitspanne hinreichend ist, um die Eigenschaftsänderung dauerhaft zu bewirken, nämlich ausgehend von einer ursprünglichen Indikatoreigenschaft, welcher die Indikatoreigenschaft des Indikatorpartikels bei seinem Einbringen in das Fluid entspricht, auf eine geänderte Indikatoreigenschaft, welche der Indikatorpartikel nach dem Vorliegen des Indikatorwerts und/oder nach dem Ablaufen der Zeitspanne annimmt. Das bedeutet, dass selbst bei einem nachfolgenden Abweichen der Zustandsgröße von dem Indikatorwert die Eigenschaft des Indikatorpartikels auf der geänderten Eigenschaft verbleibt und nicht mehr die ursprüngliche Eigenschaft annimmt. Somit kann im Falle eines Indikatorpartikels der ersten Ausführungsform bereits ein einmaliges Vorliegen des bestimmten Indikatorwerts in der Fluidströmung entlang der Bahnlinie zwischen der Einbringungsstelle und der Erfassungsstelle durch das Erfassen des Indikatorpartikels und das Auswerten der Indikatoreigenschaft festgestellt werden. Beispielsweise ist es so auf einfache Art und Weise möglich, auf das Vorliegen nachteiliger Strömungseffekte in der Fluidströmung deutlich stromabwärts derjenigen Stelle zu untersuchen, an welcher sie tatsächlich auftreten. Beispielsweise kann mithilfe des Verfahrens bei geeigneter Ausgestaltung des Indikatorpartikels ermittelt werden, ob in der fluidführenden Einrichtung, welche beispielsweise als Pumpe, insbesondere als Saugstrahlpumpe, ausgestaltet ist, beziehungsweise in der in der fluidführenden Einrichtung vorliegenden Fluidströmung Kavitation auftritt oder nicht, nämlich insbesondere mittels der ersten Ausführungsform des Indikatorpartikels. Die Kavitation ist durch das Kollabieren von Kavitationsblasen und einen hierbei auftretenden hohen Druck gekennzeichnet. Entsprechend wird zum Überprüfen auf Kavitation als Zustandsgröße der Druck verwendet und der Indikatorwert derart gewählt, dass der Indikatorpartikel auf die Kavitation, also insbesondere einen hohen Druck, mit der reversiblen Eigenschaftsänderung reagiert. Weist der Indikatorpartikel an der Erfassungsstelle, also stromabwärts der Untersuchungsstelle, seine ursprüngliche Indikatoreigenschaft auf, so kann davon ausgegangen werden, dass keine Kavitation vorliegt beziehungsweise dass der Druck entlang der Bahnlinie den Indikatorwert nicht überschritten hat. Liegt hingegen die geänderte Indikatoreigenschaft vor, so wird auf das Vorliegen von Kavitation beziehungsweise eines Drucks, der höher ist als der Indikatorwert, erkannt.

Unter dem Vorliegen des bestimmten Indikatorwerts ist insbesondere zu verstehen, dass der Istwert der Zustandsgröße dem Indikatorwert entspricht oder zumindest in einem - auch als Istwertbereich bezeichneten - Bereich liegt, welcher von dem Indikatorwert begrenzt wird, nämlich beispielsweise nach unten oder nach oben. Der Indikatorwert begrenzt insoweit ein Werteintervall einseitig, welches andererseits offen ist. Sobald der Istwert in dem Werteintervall vorliegt, ist die Bedingung für das Ablaufen der irreversiblen Eigenschaftsänderung der Indikatoreigenschaft erfüllt. Die Indikatoreigenschaft ändert sich also irreversibel vorzugsweise dann, wenn der Istwert der wenigstens einen Zustandsgröße dem Indikatorwert entspricht oder größer ist oder alternativ dem Indikatorwert entspricht oder kleiner ist, also in dem durch den Indikatorwert definierten Istwertbereich liegt. Es kann jedoch auch vorgesehen sein, dass unter dem Indikatorwert das Werteintervall an sich zu verstehen ist, sodass also der Indikatorwert als Indikatorwertbereich vorliegt. Dieser Indikatorwertbereich ist sowohl nach oben als auch nach unten begrenzt. Der bestimmte Indikatorwert liegt nun dann vor, sobald der Istwert der Zustandsgröße in dem Indikatorwertbereich liegt, sodass hieraus die irreversible Eigenschaftsänderung folgt, welche auch nach einem eventuellen Verlassen des Indikatorwertbereichs durch den Istwert erhalten bleibt. Sofern im Rahmen dieser Beschreibung von dem Istwert gesprochen wird, so ist zusätzlich oder alternativ implizit stets auch der Istwertbereich gemeint, sodass die entsprechenden Ausführungen auch auf diesen übertragbar sind, auch wenn er nicht explizit genannt ist.

Zum Ermitteln des Istwerts und/oder des Istwertbereichs wird der Indikatorpartikel an der Erfassungsstelle erfasst. Dies kann grundsätzlich auf beliebige Art und Weise erfolgen, wobei selbstverständlich nichtintrusive Verfahren, beispielsweise optische beziehungsweise bildgebende Verfahren, bevorzugt werden. Bei oder nach dem Erfassen des Indikatorpartikels wird seine Indikatoreigenschaft ausgewertet. Dieses Auswerten kann sowohl direkt als auch indirekt erfolgen. In ersterem Fall wird die Indikatoreigenschaft vorzugsweise im Zuge des Erfassens des Indikatorpartikels gemessen. Es kann jedoch auch vorgesehen sein, die Indikatoreigenschaft lediglich indirekt zu bestimmen, nämlich durch Messen einer von der Indikatoreigenschaft verschiedenen, aber von ihr abhängigen Eigenschaft, aus welcher dann anschließend auf die Indikatoreigenschaft geschlossen wird.

Nach dem Auswerten der Indikatoreigenschaft wird diese herangezogen, um den Istwert beziehungsweise den Istwertbereich der Zustandsgröße zu bestimmen, welche/welcher an der Untersuchungsstelle und mithin stromaufwärts der Erfassungsstelle vorliegt. Weil zunächst der Istwert beziehungsweise Istwertbereich an der Untersuchungsstelle nicht bekannt ist und der Indikatorpartikel beispielsweise nur zwei unterschiedliche Zustände wiedergeben kann, die die Zustandsgröße entlang des gesamten Strömungswegs beziehungsweise der gesamten Bahnlinie beschreiben, kann es notwendig sein, mehrere unterschiedliche Indikatorpartikel mit unterschiedlichen Indikatorwerten in das Fluid einzubringen, an der Erfassungsstelle zu erfassen und die jeweilige Indikatoreigenschaft auszuwerten, um tatsächlich zu dem Istwert beziehungsweise Istwertbereich der Zustandsgröße an der Untersuchungsstelle zu gelangen. Die beschriebene Erfassung von Istwerten beziehungsweise Istwertbereichen der Zustandsgröße einer Fluidströmung auf der Bahnlinie oder Trajektorie eines Indikatorpartikels entspricht einer Lagrangeschen Beschreibung der Fluidströmung.

Um den Istwert oder den Istwertbereich der Zustandsgröße des Fluids an einer bestimmten Stelle in der Fluidströmung oder in einem bestimmten Bereich der Fluidströmung (sogenannte Eulersche Beschreibung der Fluidströmung) mittels der beschriebenen grundsätzlichen Vorgehensweise unter Einsatz eines oder mehrerer Indikatorpartikel (Lagrangesche Beschreibung) zu ermitteln, kann es notwendig sein, Indikatorpartikel der oben angeführten Ausführungsformen, auch unterschiedlicher Ausführungsformen, sowie ein repräsentatives Computermodell der Fluidströmung und der Bahnlinien der darin aufgegebenen Indikatorpartikel (sogenannter Digital Twin) zu erstellen. Hierauf wird nachfolgend noch eingegangen werden.

Das Erfassen des Indikatorpartikels kann grundsätzlich auf beliebige Art und Weise erfolgen, solange die Indikatoreigenschaft unmittelbar oder zumindest mittelbar mit erfasst wird. Beispielsweise kann das Erfassen des Indikatorpartikels im Rahmen des PIV-Verfahrens (PIV : Particle Image Velocimetry) oder des PTV-Verfahrens (PTV: Particle Tracking Velocimetry) erfolgen. In diesen Fällen kann zusätzlich zu der Indikatoreigenschaft und damit dem Istwert beziehungsweise Istwertbereich der Zustandsgröße an der Erfassungsstelle die Geschwindigkeit beziehungsweise das Geschwindigkeitsfeld des Fluids beziehungsweise der Fluidströmung an der Erfassungsstelle ermittelt werden. Zudem kann die Position und der Geschwindigkeitsvektor des Indikatorpartikels ermittelt werden. Das PIV-Verfahren basiert auf einer Eulerschen Betrachtungsweise der Fluidströmung, wohingegen das PTV-Verfahren auf die Lagrangesche Betrachtungsweise zurückgreift. Selbstverständlich ist jedoch auch ein Erfassen der Indikatorpartikel möglich, bei welchem das Geschwindigkeitsfeld und/oder die Position und Geschwindigkeit des Indikatorpartikels nicht (mit) erfasst werden/wird.

Die beschriebene Vorgehensweise hat den Vorteil, dass das Ermitteln des Istwerts beziehungsweise Istwertbereichs auch an unzugänglichen Stellen der fluidführenden Einrichtung möglich ist, indem nämlich von dem Zustand des Indikatorpartikels an der Erfassungsstelle, nämlich der Indikatoreigenschaft, auf den Istwert beziehungsweise Istwertbereich der Zustandsgröße des Fluids an der stromaufwärts gelegenen Untersuchungsstelle geschlossen wird. Angesichts dieses deutlichen Vorteils kann durchaus in Kauf genommen werden, dass der mithilfe des beschriebenen Verfahrens ermittelte Istwert beziehungsweise Istwertbereich an der Untersuchungsstelle möglicherweise mit einem größeren Fehler behaftet sein wird als bei einer unmittelbaren Messung direkt an der Untersuchungsstelle. Auch kann in Kauf genommen werden, dass aufgrund des lediglich mittelbaren Bestimmens des Istwerts beziehungsweise Istwertbereichs möglicherweise mehrere unterschiedliche Indikatorpartikel, also Indikatorpartikel mit unterschiedlichen Indikatorwerten und/oder Zeitspannen bis zu einer Änderung der Indikatoreigenschaft als eindeutige Funktion des Istwertes der Zustandsgröße und/oder Indikatorpartikel unterschiedlicher Ausführungsformen, zum Einsatz kommen müssen, bis der Istwert, also der Wert der Zustandsgröße entlang der Bahnlinie, beziehungsweise der Istwertbereich mit einem akzeptablen Fehler ermittelt werden kann. Auch kann in Kauf genommen werden, dass für die Ermittlung des Istwerts beziehungsweise des Istwertbereichs der Zustandsgröße an einer bestimmten, räumlich festgelegten Untersuchungsstelle in der Fluidströmung (Eulersche Beschreibung) ein repräsentatives Computermodell der Fluidströmung und der Bahnlinien der darin aufgegebenen Indikatorpartikel (sogenannter Digital Twin) erforderlich ist, um aus den erfassten Indikatoreigenschaften der Indikatorpartikel (Lagrangesche Beschreibung) auf den Istwert beziehungsweise den Istwertbereich der zuvor räumlich festgelegten Untersuchungsstelle zu schließen.

Gemäß einer ersten Ausführungsform der Erfindung ist vorgesehen, dass die Zustandsgröße eine Normalspannung und/oder eine Scherspannung des Fluids ist und der Indikatorpartikel einen Grundkörper mit einer einen Hohlraum einschließenden Partikelhülle aufweist, wobei in dem Hohlraum ein Referenzdruck vorliegt und die Partikelhülle dazu vorgesehen und ausgebildet ist, bei einem Abweichen der Normalspannung von dem Referenzdruck um eine bestimmte Druckdifferenz die Indikatoreigenschaft in Gestalt ihrer Form irreversibel zu ändern und/oder zu reißen, und/oder wobei die Partikelhülle dazu vorgesehen und ausgebildet ist, bei einem Abweichen der Scherspannung von einer Referenzspannung die Indikatoreigenschaft in Gestalt ihrer Form irreversibel zu ändern und/oder zu reißen. Die Normalspannung beschreibt hierbei den Fluiddruck.

Der Indikatorpartikel soll also derart ausgestaltet sein, dass er die Ermittlung des Fluiddrucks ermöglicht, nämlich insbesondere an der Untersuchungsstelle und/oder entlang des Wegs des Indikatorpartikels von der Einbringungsstelle bis hin zu der Erfassungsstelle. Hierzu verfügt der Indikatorpartikel über den Grundkörper, welcher wiederum die Partikelhülle aufweist, die den Hohlraum zunächst fluiddicht einschließt. Die Partikelhülle umgreift insoweit den Hohlraum vollständig. Beispielsweise weist der Hohlraum bezogen auf ein Gesamtvolumen des Grundkörpers ein Volumen von mindestens 50 %, mindestens 75 % oder mindestens 90 % auf. Vor dem Einbringen des Indikatorpartikels in das Fluid liegt zumindest in der ersten Variante in dem Hohlraum der Referenzdruck vor, welcher insbesondere dem Indikatorwert entspricht.

Befindet sich der Indikatorpartikel in dem Fluid, so ergibt sich eine auf die Partikelhülle wirkende Kraft aus der Druckdifferenz zwischen dem momentanen Istdruck beziehungsweise der Normalspannung an der Stelle, an welcher sich der Indikatorpartikel befindet, und dem Referenzdruck. Überschreitet diese Kraft einen bestimmten Grenzwert, weicht also der Fluiddruck um die bestimmte Druckdifferenz von dem Referenzdruck ab, so soll die Partikelhülle reißen und/oder ihre Form ändern, wobei beide Vorgänge irreversibel sind. Bei dem Reißen der Partikelhülle tritt insbesondere ein Bersten des Grundkörpers beziehungsweise des Indikatorpartikels auf. Die Änderung der Form der Partikelhülle erfolgt beispielsweise als irreversible Volumenverkleinerung des Grundkörpers beziehungsweise des Hohlraums. Beispielsweise ist der Indikatorpartikel beziehungsweise die Partikelhülle derart ausgestaltet, dass bei der Formänderung beziehungsweise dem Reißen ein Druckausgleich zwischen dem Hohlraum und dem Fluid erfolgt, sodass nachfolgend in dem Hohlraum durchgehend derselbe oder zumindest nahezu derselbe Fluiddruck vorliegt wie in dem Fluid. Die Formänderung beziehungsweise das Bersten der Partikelhülle kann besonders einfach erfasst und ausgewertet werden.

In einer zweiten Variante wird die Scherspannung in dem Fluid ausgewertet. Weicht die Scherspannung von der Referenzspannung ab, insbesondere um eine bestimmte Differenz, so erfolgt wiederum die irreversible Formänderung beziehungsweise das Reißen der Hülle. Das Material der Partikelhülle wird basierend auf der Größe des Indikatorpartikels, der Dicke der Partikelhülle, dem Referenzdruck und der Druckdifferenz beziehungsweise der Scherspannungsdifferenz zwischen der Scherspannung und der Referenzspannung gewählt. Die Größe des Indikatorpartikels kann ganz grundsätzlich im Mikro- und/oder Nanometerbereich liegen. Als Material des Grundkörpers kann ein Polymer, ein Metall, eine Metalllegierung, Kohlenstoff oder ein anderes geeignetes Element zum Einsatz kommen. Auch eine Kombination der genannten Materialien, also die Verwendung wenigstens zwei der Materialien für den Indikatorpartikel beziehungsweise den Grundkörper kann vorgesehen sein.

Gemäß einer zweiten Ausführungsform der Erfindung ist vorgesehen, dass auf dem Grundkörper ein die Indikatoreigenschaft bereitstellendes Sensormaterial vorliegt, das zustandsgrößensensibel ist, wobei die Zustandsgröße beispielsweise der Fluiddruck, eine Fluidtemperatur oder eine Fluidkonzentration ist. Das Sensormaterial ist auf den Grundkörper aufgebracht. Der Grundkörper kann gemäß den vorstehenden Ausführungen ausgestaltet sein und insoweit den Hohlraum und die diesen einschließende Partikelhülle aufweisen. Der Grundkörper kann bei der Verwendung des Sensormaterials jedoch grundsätzlich beliebig ausgestaltet sein, also beispielsweise auch massiv sein.

Das Sensormaterial ist derart gewählt, dass es auf die Zustandsgröße sensibel reagiert, also seine Indikatoreigenschaft beim Vorliegen des bestimmten Indikatorwerts der Zustandsgröße ändert. Anders ausgedrückt ist das Sensormaterial zustandsgrößensensibel beziehungsweise zustandsgrößenwertsensibel. Das Sensormaterial ist überdies derart ausgestaltet beziehungsweise gewählt, dass diese Eigenschaftsänderung irreversibel abläuft. Die Zustandsgröße, welche mittels des Sensormaterials ausgewertet wird, kann beispielsweise der Fluiddruck, die Fluidtemperatur, die Fluidkonzentration, eine Stoffkonzentration, die Normalspannung oder die Scherspannung sein. Auch andere Zustandsgrößen können selbstverständlich mit einem entsprechenden Sensormaterial ausgewertet werden. Die Verwendung des Sensormaterials ermöglicht eine besonders einfache Ausgestaltung des Indikatorpartikels und zudem eine einfache Auswertung der Indikatoreigenschaft.

Als Sensormaterial kommt ganz grundsätzlich bevorzugt ein Material in Frage, welches eine oder mehrere seiner messbaren Eigenschaften in Abhängigkeit einer äußeren Zustandsgröße permanent ändert. Diese wenigstens eine Eigenschaft kann die optische Reflexivität beziehungsweise der Brechungsindex, der elektrische Widerstand, die elektrische Kapazität, die Photolumineszenz oder die chemische Zusammensetzung sein. Zu geeigneten Materialien gehören insbesondere mehrlagige poröse photonische Siliziumkristalle, thermochrome Pigmente sowie selbstorganisierende isotrope oder anisotrope Nanostrukturen, insbesondere stimuliert durch verschiedene äußere Zustandsgrößen.

In der zweiten Ausführungsform der Erfindung ist weiter vorgesehen, dass der Grundkörper, insbesondere das Sensormaterial, von einer von dem Fluid abbaubaren Schutzhülle abgedeckt ist, sodass der Grundkörper beziehungsweise das Sensormaterial erst eine bestimmte Zeitspannte nach dem Einbringen in das Fluid dem Fluid ausgesetzt ist. Die Schutzhülle ermöglicht eine besonders genaue räumliche Auswertung der Zustandsgröße beziehungsweise eine Auswertung oder Eingrenzung des Istwerts beziehungsweise des Istwertbereichs. Sie deckt den Grundkörper zumindest bereichsweise oder sogar vollständig ab. Bevorzugt übergreift sie hierbei das Sensormaterial zumindest bereichsweise oder vollständig, sofern das Sensormaterial vorliegt. Die Schutzhülle ist derart ausgestaltet, dass sie von dem Fluid abgebaut wird beziehungsweise sich in dem Fluid auflöst oder sich selbstständig abbaut, sobald sie in dem Fluid angeordnet beziehungsweise ihm ausgesetzt ist.

Das Abbauen erfolgt bevorzugt mit einer bekannten und im Wesentlichen konstanten Rate, sodass aus der Dicke beziehungsweise Stärke der Schutzhülle unmittelbar auf die Zeitspanne geschlossen werden kann, nach welcher das Fluid auf den Grundkörper beziehungsweise das Sensormaterial einwirkt. Besonders bevorzugt ist bei einer derartigen Ausgestaltung das Sensormaterial derart gewählt, dass es die Eigenschaftsänderung lediglich unmittelbar bei dem Inkontaktgeraten mit dem Fluid zulässt. Die Eigenschaftsänderung ist wiederum zustandsgrößensensibel beziehungsweise zustandsgrößenwertsensibel. Ist also die Schutzhülle abgebaut, sodass das Sensormaterial dem Fluid ausgesetzt ist, so erfolgt die Eigenschaftsänderung entsprechend dem bei Inkontakttreten mit dem Fluid vorliegenden Istwert beziehungsweise Istwertbereich.. Dies ermöglicht eine besonders genaue Ermittlung des Istwerts der Zustandsgröße beziehungsweise eine besonders genaue Lokalisierung der Untersuchungsstelle.

Eine Weiterbildung der Erfindung sieht vor, dass der wenigstens eine Indikatorpartikel Teil einer Vielzahl von Indikatorpartikeln ist, die in das Fluid eingebracht werden, wobei der Indikatorwert der Zustandsgröße für einen ersten Teil der Indikatorpartikel einem ersten Indikatorwert und für einen zweiten Teil der Indikatorpartikel einem zweiten Indikatorwert und/oder die Zeitspanne, insbesondere bis zu einer Änderung der Indikatoreigenschaft als eindeutige Funktion des Istwertes der Zustandsgröße, für den ersten Teil der Indikatorpartikel einer ersten Zeitspanne und für den zweiten Teil der Indikatorpartikel der zweiten Zeitspanne entspricht. Grundsätzlich kann dem Fluid eine beliebige Anzahl an Indikatorpartikeln zugeführt werden, nämlich beispielsweise zumindest zum Teil an der Einbringungsstelle. Der vorstehend bereits erwähnte wenigstens eine Indikatorpartikel bildet hierbei einen der mehreren Indikatorpartikeln, liegt also nicht zusätzlich zu diesen vor. Die Indikatorpartikel sind nun in mehrere Teile aufgeteilt, beispielsweise in zwei Teile. Es kann hierbei vorgesehen sein, dass jeder der Teile dieselbe Anzahl an Indikatorpartikeln aufweist. Selbstverständlich kann jedoch auch einer der Teile mehr oder weniger Indikatorpartikel enthalten als einer der anderen Teile.

Die Indikatorpartikel der unterschiedlichen Teile unterscheiden sich hinsichtlich des Indikatorwerts und/oder der Zeitspanne, insbesondere bis zu einer Änderung der Indikatoreigenschaft als eindeutige Funktion des Istwertes der Zustandsgröße. Für den ersten Teil der Indikatorpartikel entspricht der Indikatorwert dem ersten Indikatorwert beziehungsweise der ersten Zeitspanne und für den zweiten Teil dem zweiten Indikatorwert beziehungsweise der zweiten Zeitspanne. Anders ausgedrückt verfügt der erste Teil über einen oder mehrere Indikatorpartikel mit dem ersten Indikatorwert beziehungsweise der ersten Zeitspanne und der zweite Teil über einen oder mehrere Indikatorpartikel mit dem zweiten Indikatorwert beziehungsweise der zweiten Zeitspanne. Selbstredend kann jedoch eine beliebige Anzahl an Teilen vorliegen, also beispielsweise zusätzlich ein dritter Teil, ein vierter Teil und/oder ein fünfter Teil vorliegen. Die Verwendung der Indikatorpartikel mit den unterschiedlichen Indikatorwerten beziehungsweise den unterschiedlichen Zeitspannen ermöglicht eine besonders genaue Ermittlung des Istwerts beziehungsweise Istwertbereichs der Zustandsgröße.

Eine Weiterbildung der Erfindung sieht vor, dass der erste Teil der Indikatorpartikel und der zweite Teil der Indikatorpartikel gleichzeitig oder zeitversetzt und/oder an derselben Einbringungsstelle oder an voneinander beabstandeten Einbringungsstellen in das Fluid eingebracht werden, wobei der erste Teil mit einer unveränderlichen, von der jeweiligen Indikatoreigenschaft unabhängigen ersten Kennzeichnung und der zweite Teil mit einer unveränderlichen, von der jeweiligen Indikatoreigenschaft unabhängigen zweiten Kennzeichnung versehen wird. Die Kennzeichnung der Indikatorpartikel, also sowohl die erste Kennzeichnung als auch die zweite Kennzeichnung, dient einer einfachen Identifikation des jeweiligen Indikatorpartikels, trotz der eventuellen Eigenschaftsänderung. Hierzu sind die Kennzeichnungen unveränderlich und vor allem von der jeweiligen Indikatoreigenschaft unabhängig. Die Veränderung der jeweiligen Indikatoreigenschaft bewirkt also keine Veränderung der Kennzeichnung, vielmehr bleibt diese dauerhaft gleich.

Der erste Teil der Indikatorpartikel verfügt über die erste Kennzeichnung und der zweite Teil über die zweite Kennzeichnung, wobei sich die erste Kennzeichnung und die zweite Kennzeichnung voneinander unterscheiden, nämlich derart, dass bei dem Erfassen der Indikatorpartikel an der Erfassungsstelle die Indikatorpartikel dem ersten Teil und dem zweiten Teil zugeordnet werden können. Das bedeutet, dass für einen an der Erfassungsstelle erfassten Indikatorpartikel, vorzugsweise für jeden der erfassten Indikatorpartikel, die Kennzeichnung ermittelt und der Indikatorpartikel dem der Kennzeichnung entsprechenden Teil der Indikatorpartikel zugeordnet wird.

Beispielsweise werden die Indikatorpartikel in Abhängigkeit von der ursprünglichen Indikatoreigenschaft und/oder der jeweiligen Einbringungsstelle und/oder dem jeweiligen Einbringungszeitpunkt mit einer entsprechenden Kennzeichnung versehen. Die Kennzeichnung wird insoweit in Abhängigkeit von wenigstens einem oder mehreren der genannten Parameter beziehungsweise Indikatoreigenschaften ausgewählt, sodass bei dem Erfassen der Indikatorpartikel an der Erfassungsstelle eine eindeutige Zuordnung der Indikatorpartikel erfolgen kann. Indikatorpartikel, für welche unterschiedliche Parameter beziehungsweise Indikatoreigenschaften vorliegen, weisen insoweit unterschiedliche Kennzeichnungen auf, Indikatorpartikel mit den gleichen Parametern beziehungsweise Indikatoreigenschaften hingegen die gleichen Kennzeichnungen.

Grundsätzlich kann das Einbringen der Indikatorpartikel der mehreren Teile gleichzeitig oder zeitversetzt erfolgen. In ersterem Fall werden alle Indikatorpartikel der mehreren Teile gleichzeitig in das Fluid eingebracht, in letzterem Fall erfolgt dies zeitversetzt, also mit zeitlichem Abstand. Zusätzlich oder alternativ kann es vorgesehen sein, die Indikatorpartikel der mehreren Teile an derselben Einbringungsstelle oder an voneinander beabstandeten Einbringungsstellen in das Fluid einzubringen. Hierdurch lässt sich eine hohe zeitliche und/oder räumliche Auflösung des Istwerts beziehungsweise Istwertbereichs der Zustandsgröße in der Fluidströmung erreichen, sodass ein höherer Detailgrad hinsichtlich des Istwerts und/oder des Istwertbereichs beziehungsweise der Fluidströmung erzielt wird. Besonders bevorzugt erfolgt das Einbringen der Indikatorpartikel gleichzeitig an voneinander beabstandeten Einbringungsstellen oder zeitversetzt an derselben Einbringungsstelle. Auch das zeitversetzte Einbringen an beabstandeten Einbringungsstellen und das gleichzeitige Einbringen an derselben Einbringungsstelle kann jedoch sinnvoll sein.

Eine Weiterbildung der Erfindung sieht vor, dass das Erfassen des wenigstens einen Indikatorpartikels und das Auswerten der Indikatoreigenschaft berührungslos in dem Fluid oder nach einem Entnehmen des wenigstens einen Indikatorpartikels aus dem Fluid erfolgt. Hierauf wurde bereits hingewiesen. Das berührungslose Erfassen und Auswerten wird beispielsweise auf optischem Wege vorgenommen, insbesondere mittels eines optischen Sensors oder einer bilderfassenden Kamera. Der optische Sensor basiert zum Beispiel auf Lichtstreuung (Reflexion, Brechung und/oder Beugung) und/oder Lichtabsorption des Indikatorpartikels. Alternativ kann der Indikatorpartikel auch zunächst aus dem Fluid entnommen werden und erst nach dem Entnehmen seine Indikatoreigenschaft ausgewertet werden. Dies erfolgt beispielsweise durch mikroskopische Bilderfassung (REM/SEM oder TEM) oder berührungslose spektroskopische Auswertung mittels eines Aerosolmassenspektrometers. Zusätzlich oder alternativ wird die Auswertung tomografisch vorgenommen.

Auch eine Kombination der beiden genannten Vorgehensweisen ist grundsätzlich möglich. Hierbei wird beispielsweise zunächst der Indikatorpartikel berührungslos erfasst, insbesondere optisch und bevorzugt unter Erfassung des Geschwindigkeitsfelds des Fluids beziehungsweise der Geschwindigkeit des Indikatorpartikels an der Erfassungsstelle. Nach dem berührungslosen Erfassen wird der Indikatorpartikel aus dem Fluid entnommen, die Indikatoreigenschaft ausgewertet und aus dieser auf den Istwert beziehungsweise Istwertbereich der Zustandsgröße entlang der Bahnlinie oder an der Untersuchungsstelle geschlossen. Hierdurch wird eine besonders hohe Flexibilität des beschriebenen Verfahrens erzielt.

Eine Weiterbildung der Erfindung sieht vor, dass bei Ausbleiben der Eigenschaftsänderung der Indikatorwert verändert wird, bis die Eigenschaftsänderung auftritt, oder bei Auftreten der Eigenschaftsänderung der Indikatorwert verändert wird, bis die Eigenschaftsänderung ausbleibt, wobei aus dem Indikatorwert I₁, bei welchem die Eigenschaftsänderung zum ersten Mal ausgeblieben ist, und aus dem Indikatorwert I₂, bei welchem die Eigenschaftsänderung zum ersten Mal aufgetreten ist, auf den Istwert beziehungsweise Istwertbereich der Zustandsgröße geschlossen wird. Anders ausgedrückt ist es vorgesehen, dass bei Ausbleiben der Eigenschaftsänderung der Indikatorwert verändert wird, bis die Eigenschaftsänderung auftritt, oder bei Auftreten der Eigenschaftsänderung der Indikatorwert verändert wird, bis die Eigenschaftsänderung ausbleibt, wobei aus einem ersten Indikatorwert des Indikatorwerts, bei welchem die Eigenschaftsänderung ausgeblieben ist, und aus einem zweiten Indikatorwert des Indikatorwerts, bei welchem die Eigenschaftsänderung aufgetreten ist, auf den Istwert beziehungsweise Istwertbereich der Zustandsgröße geschlossen wird.

In anderen Worten, es werden mehrere Indikatorpartikel mit unterschiedlichen Indikatorwerten verwendet, beispielsweise Indikatorpartikel, die teilweise einen ersten Indikatorwert und teilweise einen zweiten Indikatorwert aufweisen. Hierbei ist es vorgesehen, zunächst den ersten Teil der Indikatorpartikel in das Fluid einzubringen und an der Erfassungsstelle die Indikatoreigenschaft auszuwerten. Entspricht die Indikatoreigenschaft der ursprünglichen Indikatoreigenschaft, ist also die Eigenschaftsänderung ausgeblieben, so wird der zweite Teil der Indikatorpartikel mit dem von dem ersten Indikatorwert verschiedenen zweiten Indikatorwert in das Fluid eingebracht, beispielsweise an derselben Einbringungsstelle. Sollte die Eigenschaftsänderung erneut ausbleiben, so werden Indikatorpartikel mit einem von dem ersten Indikatorwert und dem zweiten Indikatorwert verschiedenen weiteren Indikatorwert in das Fluid eingebracht. Dies wird solange durchgeführt und entsprechend der Indikatorwert so lange verändert, bis die Eigenschaftsänderung zum ersten Mal auftritt (und zwar bei I₂) und bei dem Auswerten festgestellt wird.

Wird bereits für den ersten Teil der Indikatorpartikel die Eigenschaftsänderung festgestellt, so erfolgt ebenfalls das Verändern des Indikatorwerts und das Einbringen des zweiten Teils der Indikatorpartikel. Hierbei wird der Indikatorwert verändert, bis die Eigenschaftsänderung zum ersten Mal ausbleibt (und zwar bei I₁) Sollte also auch für den zweiten Teil der Indikatorpartikel die Eigenschaftsänderung auftreten, so wird der dritte Teil der Indikatorpartikel in das Fluid eingebracht, welche den von dem ersten Indikatorwert und dem zweiten Indikatorwert weiteren Indikatorwert aufweisen. Diese Vorgehensweise wird insbesondere erst unterbrochen, sobald die Eigenschaftsänderung der Indikatorpartikel ausbleibt.

Aus den unterschiedlichen Indikatorwerten der in das Fluid eingebrachten Indikatorpartikel werden nun der erste Indikatorwert I₁ und der zweite Indikatorwert I₂ ermittelt. Der erste Indikatorwert ist der Indikatorwert eines Indikatorpartikels, bei welchem die Eigenschaftsänderung zum ersten Mal ausgeblieben ist und der zweite Indikatorwert der Indikatorwert eines solchen Indikatorpartikels, bei welchem die Eigenschaftsänderung zum ersten Mal aufgetreten ist. Bevorzugt werden der erste Indikatorwert I₁ und der zweite Indikatorwert I₂ derart gewählt, dass ihre Werte möglichst weit voneinander entfernt sind.. Der erste Indikatorwert und der zweite Indikatorwert grenzen also den Istwert beziehungsweise Istwertbereich der Zustandsgröße in der Fluidströmung ein. Aus den beiden Indikatorwerten kann folglich besonders genau auf die Istwerte der Maximal- und Minimalwerte der Zustandsgröße beziehungsweise den Istwertbereich der Zustandsgröße bezüglich der betrachteten Untersuchungsstellen geschlossen werden. Liegen die Untersuchungsstellen räumlich in unmittelbarer Nähe, so nähern sich die ermittelten Indikatorwerte I₁ und I₂einander an und entsprechen dem Istwert an der Untersuchungsstelle.

Die Veränderung des Indikatorwerts eines Indikatorpartikels von dem ersten auf den zweiten Indikatorwert kann auf unterschiedliche Art und Weise erfolgen. Beispielsweise wird der Istwert des Minimalwerts der Zustandsgröße auf den Mittelwert des ersten Indikatorwerts und des zweiten Indikatorwerts gesetzt, falls für den ersten Indikatorwert eine Eigenschaftsänderung ausbleibt und für den zweiten Indikatorwert eine Eigenschaftsänderung stattfindet. Es kann jedoch auch vorgesehen sein, dass komplexere, insbesondere nicht auf Mittelwertbildung basierende, Verfahren zum Ermitteln der Istwerte der Maximal- und Minimalwerte der Zustandsgröße beziehungsweise des Istwertbereichs verwendet werden. Beispielsweise werden die Istwerte der Maximal- und Minimalwerte der Zustandsgröße beziehungsweise des Istwertbereichs der Zustandsgröße aus der Indikatoreigenschaft des Indikatorpartikels beziehungsweise den Indikatorwerten der mehreren Indikatorpartikel mittels Machine-Learning und/oder eines neuronalen Netzwerks ermittelt. Dies gilt im Übrigen unabhängig von der beschriebenen Vorgehensweise der Verwendung der unterschiedlichen Indikatorwerte. Hierdurch wird eine besonders genaue sowie zeit- und kosteneffiziente Bestimmung der Istwerte der Maximal- und Minimalwerte der Zustandsgröße beziehungsweise des Istwertbereichs der Zustandsgröße bezüglich der herangezogenen Untersuchungsstellen ermöglicht.

Eine Weiterbildung der Erfindung sieht vor, dass unter Verwendung eines Modells der Fluidströmung und/oder der Bewegung des Indikatorpartikels in der Fluidströmung wenigstens ein Prädiktionswert beziehungsweise ein Prädiktionswertebereich für die Zustandsgröße, insbesondere entlang der Bahnlinie des wenigstens einen modellierten Indikatorpartikels, berechnet und mithilfe des wenigstens einen Indikatorpartikels verifiziert wird, wobei bei einer Abweichung des Prädiktionswerts beziehungsweise des Prädiktionswertebereichs von dem mittels des wenigstens einen Indikatorpartikels ermittelten Istwert beziehungsweise Istwertbereich das Modell an den Istwert beziehungsweise Istwertbereich angeglichen wird. Das Modell liegt insbesondere in Form eines digitalen Zwillings (Digital Twin) der Fluidströmung beziehungsweise der fluidführenden Einrichtung vor. Das Modell ist insoweit dazu vorgesehen und ausgebildet, das Verhalten der Fluidströmung und damit die Bewegung des Indikatorpartikels, beispielsweise in Form der Bahnlinie, zu ermitteln, insbesondere zumindest räumlich aufgelöst. Zusätzlich kann eine temporale Auflösung des Verhaltens der Fluidströmung von dem Modell berücksichtigt werden. Das Modell beruht beispielsweise auf der Finite Differenzen-, der Finite Volumen-, der Finite Elemente- oder einer netzfreien Methode.

Das Modell wird herangezogen, um den wenigstens einen Prädiktionswert beziehungsweise Prädiktionswertebereich für die Zustandsgröße und/oder die Bewegung des Indikatorpartikels beziehungsweise die Bahnlinie zu berechnen. Unter dem Prädiktionswert ist ein Wert der Zustandsgröße zu verstehen, welchen die Zustandsgröße gemäß dem Modell an einer bestimmten Stelle, insbesondere der Untersuchungsstelle, aufweist. Unter dem Prädiktionswertebereich ist ein Wertebereich der Zustandsgröße zu verstehen, in welchem sich die Zustandsgröße gemäß dem Modell innerhalb eines bestimmten Zeitraums beziehungsweise innerhalb einer bestimmten Wegstrecke entlang der Bahnlinie befindet. Um den Prädiktionswert beziehungsweise den Prädiktionswertebereich zu überprüfen beziehungsweise zu verifizieren, wird der wenigstens eine Indikatorpartikel in das Fluid eingebracht. Bei seinem Erreichen der Erfassungsstelle wird der Indikatorpartikel erfasst und seine Indikatoreigenschaft ausgewertet. Aus der Indikatoreigenschaft wird nachfolgend auf den Istwert beziehungsweise Istwertbereich der Zustandsgröße geschlossen. Entspricht der Istwert dem Prädiktionswert beziehungsweise entspricht der Istwertbereich dem Prädiktionswertebereich, so kann das Modell als bestätigt angesehen werden, zumindest hinsichtlich des Istwerts an der Untersuchungsstelle beziehungsweise hinsichtlich des Istwertbereichs entlang der untersuchten Wegstrecke der Bahnlinie. Selbstverständlich können mehrere Prädiktionswerte beziehungsweise Prädiktionswertebereiche ermittelt werden und mittels eines oder mehreren Indikatorpartikeln auf die beschriebene Art und Weise verifiziert werden.

Weicht hingegen der Istwert beziehungsweise der Istwerbereich von dem Prädiktionswert beziehungsweise von dem Prädiktionswertebereich ab beziehungsweise sind diese nicht im Einklang, so ist das momentane Modell nicht hinreichend, um die Fluidströme vollständig und korrekt zu beschreiben. Aus diesem Grund erfolgt eine Korrektur des Modells derart, dass nachfolgend der wenigstens eine (erneut berechnete) Prädiktionswert beziehungsweise Prädiktionswertebereich dem Istwert beziehungsweise Istwertbereich entspricht, zumindest innerhalb einer vorgegebenen Toleranz. Es kann vorgesehen sein, dass die beschriebene Vorgehensweise mehrfach wiederholt wird, insbesondere für eine Vielzahl von unterschiedlichen Untersuchungsstellen beziehungsweise für eine Vielzahl von unterschiedlichen Wegstrecken entlang einer Bahnlinie , sodass eine eingehende Überprüfung und Anpassung des Modells an die tatsächliche Fluidströmung erfolgt. Hierbei wird jeweils ein neuer Prädiktionswert beziehungsweise ein neuer Prädiktionswertebereich berechnet und auf die beschriebene Art und Weise verifiziert, sodass schlussendlich eine Mehrzahl an Prädiktionswerten beziehungsweise Prädiktionswertebereichen vorliegt.

Der Prädiktionswert wird vorzugsweise für die Untersuchungsstelle berechnet, insbesondere für die zweite Ausführungsform des Indikatorpartikels. Es kann jedoch auch vorgesehen sein, dass mithilfe des Modells der Weg des Indikatorpartikels von der Einbringungsstelle bis hin zu der Erfassungsstelle modelliert wird, sodass nachfolgend der Verlauf des Istwerts beziehungsweise der Istwertbereich entlang der von dem Indikatorpartikel zurückgelegten Wegstrecke bekannt ist. Diese Vorgehensweise wird vor allem für die erste Ausführungsform und die dritte Ausführungsform des Indikatorpartikels durchgeführt. Aus dem Verlauf des Istwerts beziehungsweise aus dem Istwertbereich wird nachfolgend darauf geschlossen, ob die Eigenschaftsänderung des Indikatorpartikels durch das Fluid zu erwarten ist oder nicht. Diese Erkenntnis wird nachfolgend zum Verifizieren und Anpassen des Modells herangezogen. Im Falle der dritten Ausführungsform kann vorgesehen sein, dass der Verlauf des Istwerts entlang zumindest eines Teils der Bahnlinie oder der gesamten Bahnlinie aus den Indikatoreigenschaften der einzelnen Teilbereiche ermittelt wird. Insgesamt wird mithilfe der beschriebenen Vorgehensweise die Erstellung eines Modells beziehungsweise eines digitalen Zwillings der Fluidströmung beziehungsweise der aktuellen Strömungsverhältnisse in der fluidführenden Einrichtung mit einer äußerst hohen Genauigkeit umgesetzt.

Eine Weiterbildung der Erfindung sieht vor, dass als Grundkörper ein Grundkörper verwendet wird, auf dem mehrere Sensorelemente und/oder Sensorbereiche ausgebildet sind, wobei ein erster Teil der Sensorelemente beziehungsweise Sensorbereiche aus dem Sensormaterial und ein zweiter Teil der Sensorelemente beziehungsweise Sensorbereiche aus einem von dem Sensormaterial verschiedenen Sensormaterial besteht. Der Indikatorpartikel weist insoweit unterschiedliche Sensormaterialien auf, welche den mehreren Sensorelementen beziehungsweise Sensorbereichen zugeordnet sind. Beispielsweise sind die Sensormaterialien für dieselbe Zustandsgröße, jedoch verschiedene Indikatorwerte und/oder Zeitspannen gewählt. Es kann jedoch auch vorgesehen sein, dass die Sensormaterialien dem Ermitteln unterschiedlicher Zustandsgrößen dienen.

Grundsätzlich können eine beliebige Anzahl an Sensorelementen und/oder Sensorbereiche und eine beliebige Anzahl an unterschiedlichen Sensormaterialien vorliegen. Sind lediglich zwei Sensormaterialien vorgesehen, nämlich das Sensormaterial und das von diesem verschiedene Sensormaterial, so sind die Sensorelemente beziehungsweise Sensorbereiche in den ersten Teil und den zweiten Teil aufgeteilt. Selbstverständlich können jedoch auch mehr unterschiedliche Sensormaterialien vorliegen, wobei die Anzahl der Teile, auf welche die Sensorelemente beziehungsweise Sensorbereiche aufgeteilt sind, der Anzahl der unterschiedlichen Sensormaterialien entspricht. Die Verwendung der unterschiedlichen Sensormaterialien ermöglicht eine höhere Genauigkeit bei dem Ermitteln des Istwerts beziehungsweise Istwertbereichs und/oder eine Reduzierung der für das Ermitteln benötigten Zeit.

Eine Weiterbildung der Erfindung sieht vor, dass als Indikatorpartikel ein Indikatorpartikel verwendet wird, bei welchem die Sensorelemente und/oder Sensorbereiche von der Schutzhülle mit voneinander verschiedenen Hüllstärken abgedeckt sind. Das bedeutet schlussendlich, dass die Sensorelemente beziehungsweise Sensorbereiche nach unterschiedlichen Zeitspannen nach dem Einbringen des Indikatorpartikels in das Fluid dem Fluid ausgesetzt sind. Dienen die Sensorelemente beziehungsweise Sensorbereiche dem Ermitteln von Istwerten beziehungsweise Istwertbereichen derselben Zustandsgröße und sind hierzu die Änderungen ihrer Indikatoreigenschaften zustandsgrößenwertsensibel, entweder über unterschiedliche Indikatorwerte oder Indikatoreigenschaften die als eindeutige Funktion der Istwerte vorliegen, , so kann der Istwert beziehungsweise Istwertbereich der Zustandsgröße zu unterschiedlichen Zeitpunkten beziehungsweise unterschiedlichen Zeitintervallen erfasst werden. Hierdurch ist eine besonders präzise Ermittlung des Istwerts beziehungsweise Istwertbereichs entlang der von dem Indikatorpartikel in dem Fluid zurückgelegten Wegstrecke, also der Bahnlinie, möglich. Beispielsweise ist die eingangs erwähnte dritte Ausführungsform des Indikatorpartikels mit einer Vielzahl von Sensorelementen beziehungsweise Sensorbereichen ausgestaltet, die mit unterschiedlichen Hüllstärken abgedeckt sind. Die Schutzhülle ist dabei bevorzugt derart dimensioniert, dass ein erstes der Sensorelemente beziehungsweise Sensorbereiche unmittelbar bei dem Einbringen des Indikatorpartikels in das Fluid mit dem Fluid beaufschlagt wird und ein letztes der Sensorelemente beziehungsweise Sensorbereiche unmittelbar vor der Erfassungsstelle. Hierdurch ist ein Rückschluss auf den Istwert beziehungsweise Istwertbereich der Zustandsgröße über die gesamte Bahnlinie möglich. Die Erfindung betrifft weiterhin ein Verfahren zum Betreiben einer fluidführenden Einrichtung mit den Merkmalen des Anspruchs 9, wobei ein Istwert und/oder ein Istwertbereich wenigstens einer Zustandsgröße des Fluids in einer in der Einrichtung vorliegenden Fluidströmung mittels wenigstens eines in das Fluid eingebrachten Indikatorpartikels unter Verwendung des Verfahrens gemäß den Ausführungen im Rahmen dieser Beschreibung ermittelt wird.

Auf die Vorteile einer derartigen Vorgehensweise beziehungsweise einer derartigen Ausgestaltung der fluidführenden Einrichtung wurde bereits hingewiesen. Sowohl die fluidführende Einrichtung als auch das Verfahren zu ihrem Betreiben können gemäß den Ausführungen im Rahmen dieser Beschreibung weitergebildet sein, sodass insoweit auf diese verwiesen wird. Der Hinweis hinsichtlich des Istwerts und des Istwertbereichs gilt weiterhin.

Eine Weiterbildung der Erfindung sieht vor, dass bei einer Abweichung des Istwerts von einem bereits zuvor ermittelten Istwert und/oder von einem mithilfe eines Modells der Fluidströmung ermittelten Prädiktionswert auf eine Fehlfunktion der fluidführenden Einrichtung erkannt wird. Es ist also beispielsweise vorgesehen, den Istwert beziehungsweise Istwertbereich mithilfe des beschriebenen Verfahrens zu einem ersten Zeitpunkt zu ermitteln, insbesondere unmittelbar nach einer Inbetriebnahme der fluidführenden Einrichtung. Nachfolgend wird der Istwert beziehungsweise Istwertbereich für dieselbe Untersuchungsstelle beziehungsweise Wegstrecke auf der Bahnlinie mit zeitlichem Abstand wiederholt ermittelt. Tritt hierbei eine Veränderung des Istwerts beziehungsweise Istwertbereichs auf, weicht also der zuletzt ermittelte Istwert beziehungsweise Istwertbereich von dem zuvor ermittelten Istwert beziehungsweise Istwertbereich ab, insbesondere um mehr als eine zulässige Toleranz, so wird auf die Fehlfunktion der fluidführenden Einrichtung erkannt und diese beispielsweise einem Benutzer der Einrichtung angezeigt. Entspricht hingegen der Istwert beziehungsweise Istwertbereich dem zuvor ermittelten Istwert beziehungsweise Istwertbereich, bevorzugt wiederum innerhalb der gewünschten Toleranz, so wird auf eine ordnungsgemäße Funktion der fluidführenden Einrichtung erkannt.

Zusätzlich oder alternativ kann es vorgesehen sein, mithilfe des Modells den Prädiktionswert zu ermitteln, nämlich insbesondere für die Untersuchungsstelle beziehungsweise Wegstrecke auf der Bahnlinie, für welche auch der Istwert beziehungsweise Istwertbereich mittels des mindesten einen Indikatorpartikels bestimmt wird. Bevorzugt wird das Modell zunächst kalibriert und unter Verwendung des Istwerts beziehungsweise Istwertbereichs derart angepasst, dass der Prädiktionswert dem Istwert entspricht beziehungsweise der Prädiktionswertebereich dem Istwertbereich entspricht. Nachfolgend wird der Istwert beziehungsweise Istwertbereich erneut ermittelt, beispielsweise periodisch, vorzugsweise mittels wenigstens eines weiteren Indikatorpartikels, welcher beispielsweise identisch zu dem Indikatorpartikel ausgestaltet ist. Gleichzeitig wird der Prädiktionswert bzw. Prädiktionswertebereich ermittelt, nämlich insbesondere für dieselbe Untersuchungsstelle beziehungsweise Wegstrecke auf der Bahnlinie, für welche auch der Istwert beziehungsweise Istwertbereich ermittelt wird. Weicht der Istwert beziehungsweise Istwertbereich von dem Prädiktionswert ab, so wird wiederum auf die Fehlfunktion erkannt. Entspricht der Istwert dem Prädiktionswert beziehungsweise entspricht der Istwertbereich dem Prädiktionswertbereich, so wird auf die ordnungsgemäße Funktion erkannt. In beiden Fällen wird vorzugsweise wiederum der bereits erwähnte Toleranzbereich beachtet. Hierdurch kann mit äußerst geringem Aufwand und ohne starke und dauerhafte Beeinflussung der Fluidströmung eine Diagnose der fluidführenden Einrichtung während einem laufenden Betrieb derselben erzielt werden.

Die Erfindung betrifft schließlich eine Einrichtung zum Ermitteln eines Istwerts und/oder eines Istwertbereichs wenigstens einer Zustandsgröße eines Fluids in einer Fluidströmung mittels wenigstens eines in das Fluid eingebrachten Indikatorpartikels, unter Verwendung des Verfahrens gemäß den Ausführungen im Rahmen dieser Beschreibung. Die Einrichtung weist die in dem Anspruch 11 genannten Merkmale auf.

Die Erfindung wird nachfolgend anhand der in der Zeichnung dargestellten Ausführungsbeispiele näher erläutert, ohne dass dabei eine Beschränkung der Erfindung erfolgt. Dabei zeigt:
- Figur 1: eine schematische Darstellung einer Einrichtung zum Ermitteln eines Istwerts beziehungsweise Istwertbereichs wenigstens einer Zustandsgröße eines, insbesondere flüssigen, Fluids in einer Fluidströmung sowie eine fluidführende Einrichtung,
- Figur 2: eine schematische Darstellung einer ersten Ausführungsform des Indikatorpartikels,
- Figur 3: eine schematische Darstellung einer zweiten Ausführungsform des Indikatorpartikels,
- Figur 4: eine schematische Darstellung einer dritten Ausführungsform des Indikatorpartikels, sowie
- Figur 5: einen Indikatorpartikel sowie ein Diagramm, in welchem ein Druck des Fluids entlang von mehreren Indikatorpartikel in dem Fluid zurückgelegten Bahnlinien aufgetragen sind.

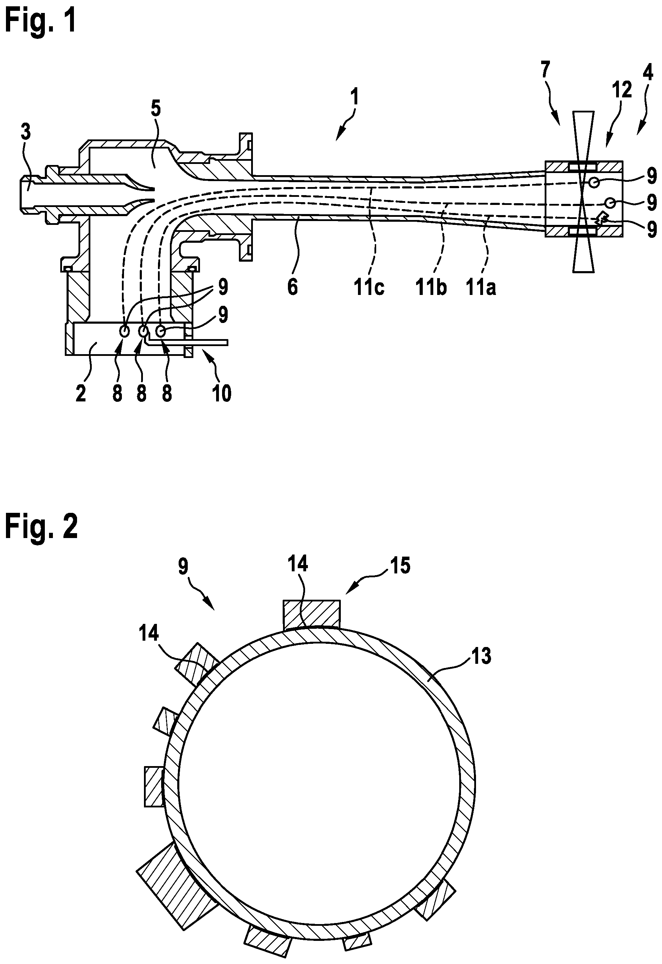

Die Figur 1 zeigt zum einen eine fluidführende Einrichtung 1, nämlich eine Strahlpumpe, welche einen Saugmediumeinlass 2, einen Treibmediumeinlass 3 sowie einen Auslass 4 aufweist. Der Treibmediumeinlass 3 ist düsenförmig ausgestaltet und mündet in eine Mischkammer 5 ein. In Verlängerung des Treibmediumeinlasses 3 schließt sich ein Diffusor 6 strömungstechnisch an die Mischkammer 5 an. Über den Diffusor 6 ist die Mischkammer 5 strömungstechnisch an den Auslass 4 angeschlossen. Ebenfalls strömungstechnisch an die Mischkammer 5 angeschlossen ist der Saugmediumeinlass 2.

Der fluidführenden Einrichtung 1 wird ein erstes Fluid, das sogenannte Treibmedium, bei hohem Druck und - optional - hoher Temperatur über den Treibmediumeinlass 3 zugeführt. Eine Beschleunigung dieses erstens Fluids durch die Düse 3 führt zu einem geringeren Druck des ersten Fluids in der Mischkammer 5 bezogen auf einen Druck an dem Saugmediumeinlass 2. Infolgedessen wird ein zweites Fluid, das sogenannte Saugmedium, das an dem Saugmediumeinlass 2 - mit optional geringer Temperatur - vorliegt, unter weiterer Druckreduzierung von dem Saugmediumeinlass 2 in die Mischkammer 5 gefördert. Das erste Fluid und das zweite Fluid vermischen sich in der Mischkammer 5 und im darauffolgenden Diffusor 6 unter Temperaturausgleich und erneuter Druckerhöhung bevor ein aus den beiden Fluiden bestehendes Fluidgemisch die Einrichtung durch den Auslass 4 verlässt. Hierbei können das erste Fluid und das zweite Fluid stoffgleich sein.

Der fluidführenden Einrichtung 1 ist eine Einrichtung 7 zugeordnet, welche zum Ermitteln eines Istwerts beziehungsweise eines Istwertbereichs wenigstens einer Zustandsgröße eines in der fluidführenden Einrichtung 1 vorliegenden Fluids dient. Die Einrichtung 7 kann insoweit auch als Messeinrichtung bezeichnet werden. Zum Ermitteln des Istwerts oder des Istwertbereichs ist es vorgesehen, an einer Einbringungsstelle 8 oder mehreren Einbringungsstellen 8 (jeweils) einen (oder mehrere) Indikatorpartikel 9 in das Fluid einzubringen. In dem hier dargestellten Ausführungsbeispiel liegt die Einbringungsstelle 8 an dem Saugmediumeinlass 2 vor. Sie kann auch strömungstechnisch zwischen dem Saugmediumeinlass 2 und der Mischkammer 5 vorliegen, jedenfalls also stromaufwärts der Mischkammer, des Diffusors 6 und des Auslasses 4. Das Einbringen der Indikatorpartikel 9 erfolgt mittels einer Einbringeinrichtung 10, welche hier lediglich angedeutet ist. Nach dem Einbringen der Indikatorpartikel 9 in das Fluid durchlaufen diese die fluidführende Einrichtung 1 ausgehend von der Einbringungsstelle 8 entlang einer jeweiligen Bahnlinie 11a, 11b oder 11c. Stromabwärts der Einbringungsstelle 8 liegt eine Erfassungseinrichtung 12 vor, welche dem Erfassen der Indikatorpartikel 9 dient. Das Erfassen der Indikatorpartikel 9 wird beispielsweise mittels einer optischen Erfassungseinrichtung vorgenommen. Dies ist hier lediglich äußerst schematisch angedeutet.

Die Indikatorpartikel 9 sind derart vorgesehen und ausgebildet, dass sie bei Vorliegen eines bestimmten Indikatorwerts der zu ermittelnden Zustandsgröße einer irreversiblen Eigenschaftsänderung einer Indikatoreigenschaft des jeweiligen Indikatorpartikels 9 unterzogen werden. In dem hier dargestellten Ausführungsbeispiel wird die Form der Indikatorpartikel 9 als Indikatoreigenschaft herangezogen. Es ist zu erkennen, dass im Bereich der Erfassungseinrichtung 12 einer der Indikatorpartikel 9 eine geänderte Form aufweist, wohingegen die anderen Indikatorpartikel 9 dieselbe Form aufweisen wie bei ihrer Einbringung in das Fluid an der Einbringungsstelle 8. Hieraus kann geschlossen werden, dass der Indikatorpartikel 9, welcher seine Form verändert hat, entlang der jeweiligen Bahnlinie 11a, 11b oder 11c in einen Bereich der Fluidströmung gelangt ist, in welcher die Zustandsgröße einen Istwert aufweist, welcher einem Indikatorwert des Indikatorpartikels 9 entspricht oder diesen übersteigt beziehungsweise unterschreitet. Bei einer solchen Entsprechung oder einem solchen Übersteigen beziehungsweise Unterschreiten des Indikatorwerts durch den Istwert erfolgt die irreversible Eigenschaftsänderung, in diesem Fall eine Veränderung der Form. Hierfür liegen die Indikatorpartikel 9 in einer ersten Ausführungsform vor, in welcher die Zustandsgröße der Fluiddruck ist und der Indikatorwert der Indikatorpartikel so gewählt ist, dass die auftretende Formänderung auf das Auftreten von Kavitation in der Fluidströmung hinweist. Die Figur 2 zeigt eine schematische Darstellung einer zweiten Ausführungsform des Indikatorpartikels 9 beziehungsweise einem der Indikatorpartikel 9. In dem dargestellten Ausführungsbeispiel weist der Indikatorpartikel 9 einen Grundkörper 13 auf, auf welchem wenigstens ein Sensorelement 14 aus einem Sensormaterial (in dem hier dargestellten Ausführungsbeispiel mehrere Sensorelemente 14) ausgebildet sind. Von den Sensorelementen 14 sind lediglich einige beispielhaft gekennzeichnet. Bevorzugt sind jeweils mehrere baugleiche Sensorelemente, gleichmäßig über die Oberfläche des Indikatorpartikels verteilt. Die Sensorelemente 14 sind von einer Schutzhülle 15 abgedeckt, wobei die Schutzhülle 15 für die verschiedenen Sensorelemente 14 unterschiedliche, über das jeweilige Sensorelement 14 konstante Hüllstärken aufweist. Bevorzugt haben baugleiche Sensorelemente dieselbe Schutzhülle, insbesondere mit gleicher Hüllstärke. Die Schutzhülle 15 ist derart ausgestaltet, dass sie von dem Fluid nach dem Einbringen des Indikatorpartikels 9 in dieses zersetzt wird, sodass die Sensorelemente 14 erst nach einer bestimmten Zeitspanne dem Fluid unmittelbar ausgesetzt sind. Das Sensormaterial, aus welchen die Sensorelemente 14 bestehen, ist zustandsgrößensensibel beziehungsweise zustandsgrößenwertsensibel. Das bedeutet, dass das Sensormaterial der irreversiblen Eigenschaftsänderung seiner Indikatoreigenschaft unterzogen wird, sobald es mit dem umgebenden Fluid in Kontakt tritt, wobei sich die Indikatoreigenschaft entsprechend dem Istwert beziehungsweise Istwertbereich der Zustandsgröße unmittelbar nach dem Beaufschlagen des jeweiligen Sensorelements 14 mit dem Fluid ändert. Es kann hierbei vorgesehen sein, dass sich die Eigenschaft des Sensormaterials der unterschiedlichen Sensorelemente 14 bei Vorliegen desselben oder unterschiedlicher Indikatorwerte irreversibel ändert. Es kann auch vorgesehen sein, dass sich die Eigenschaft des Sensormaterials der unterschiedlichen Sensorelemente 14 als eindeutige Funktion von dem Istwert der Zustandsgröße direkt nach in Kontakt treten der Sensorelemente 14 mit dem umgebenden Fluid ändert. Das Sensormaterial kann zusätzlich oder alternativ für unterschiedliche Zustandsgrößen des Fluids ausgelegt sein.

Die Verwendung mehrerer identischer über die Partikeloberfläche verteilter Sensorelemente ermöglicht eine sehr einfache optische Erfassung der Indikatoreigenschaft eines Indikatorpartikels. Eine eindeutige Zuordnung von Hüllstärke und Oberfläche eines Sensorelements erlaubt eine sehr einfache Zuordnung zwischen der erfassten Indikatoreigenschaft und dem Zeitpunkt (nach Einbringen des Indikatorpartikels in das Fluid) an dem der Istwert oder Istwertbereich vorlag.

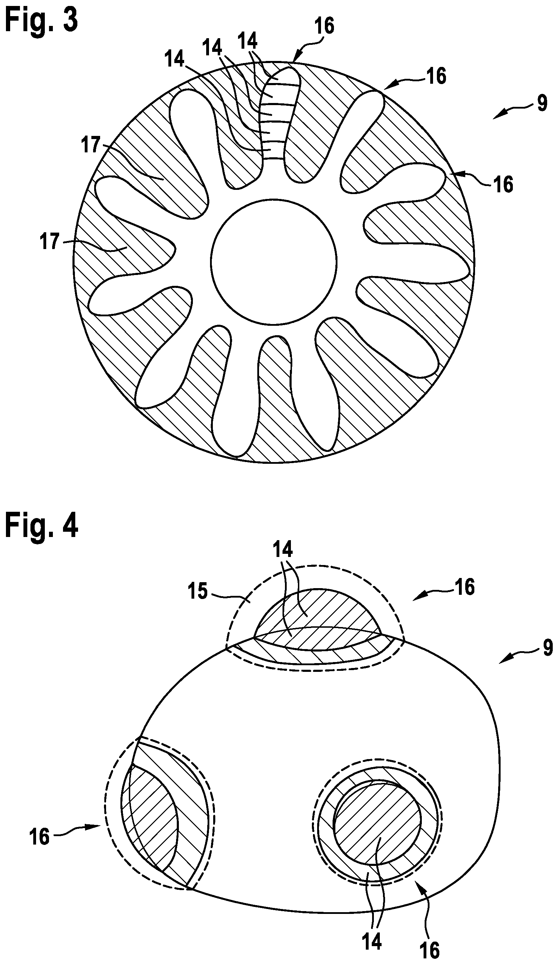

Die Figur 3 zeigt eine schematische Darstellung einer dritten Ausgestaltung des Indikatorpartikels 9. Grundsätzlich wird auf die vorstehenden Ausführungen hingewiesen und nachfolgend lediglich auf die Unterschiede eingegangen. Diese liegen darin, dass von dem Grundkörper 13 mehrere Sensorelementanordnungen 16 ausgehen, von welchen lediglich einige beispielhaft gekennzeichnet sind. Jede dieser Sensorelementanordnungen 16 verfügt über mehrere Sensorelemente 14. Dies ist ebenfalls lediglich beispielshaft angedeutet. Die Sensorelementanordnungen 16 erstrecken sich jeweils ausgehend von dem Grundkörper 13 nach außen und sind hierbei voneinander beabstandet. In zwischen den Sensorelementanordnungen 16 vorliegenden Zwischenräumen 17 (wiederum lediglich beispielhaft gekennzeichnet), liegt die Schutzhülle 15 vor. Nach dem Einbringen des Indikatorpartikels 9 in das Fluid wird die Schutzhülle 15 von außen nach innen abgetragen. Das bedeutet, dass die Sensorelemente 14 zeitlich gesehen nacheinander mit dem Fluid beaufschlagt werden.

Jedes der Sensorelemente 14 ist derart ausgestaltet, dass sich die Eigenschaft des Sensormaterials irreversibel ändert, sofern der bestimmte Indikatorwert der Zustandsgröße vorliegt, wenn es mit dem Fluid beaufschlagt wird. Alternativ ist jedes der Sensorelemente 14 derart ausgestaltet, dass sich die Eigenschaft des Sensormaterials irreversibel als eindeutige Funktion von dem Istwert der Zustandsgröße direkt nach in Kontakt treten des Sensormaterials mit dem umgebenden Fluid ändert. Besonders bevorzugt sind die Sensorelemente 14 derart ausgestaltet, dass die irreversible Eigenschaftsänderung lediglich unmittelbar zu Beginn des dem Fluidaussetzens des jeweiligen Sensorelements 14 möglich ist. Entsprechend kann nachfolgend bei dem Auswerten der Indikatoreigenschaft des Indikatorpartikels 9 beziehungsweise der Indikatoreigenschaften der Sensorelemente 14 ein zeitlicher Ablauf des Istwerts beziehungsweise Istwertbereichs der Zustandsgröße entlang einer der Bahnlinien 11a, 11b und 11c ausgewertet werden.

Die Figur 4 zeigt eine schematische Darstellung einer vierten Ausführungsform des Indikatorpartikels 9. Erneut wird auf die vorstehenden Ausführungen Bezug genommen. Wiederum liegen mehrere Sensorelementanordnungen 16 vor, die jeweils mehrere Sensorelemente 14 aufweisen. Die Sensorelemente 14 sind jeweils unmittelbar auf dem Grundkörper 13 angeordnet beziehungsweise ausgebildet. Beispielsweise liegt ein zentrales Sensorelement 14 vor, welches von den weiteren Sensorelementen 14 jeweils umgriffen ist, beispielsweise ringförmig. Jede der Sensorelementanordnungen 16 ist von der Schutzhülle 15 übergriffen, welche beispielsweise kugelabschnittsförmig auf dem Grundkörper 13 ausgebildet ist. Die Schutzhülle 15 ist derart angeordnet, dass sie vor dem Einbringen des Indikatorpartikels 9 in das Fluid zumindest einen Teil der Sensorelemente 14, vorzugsweise alle Sensorelemente 14, übergreift. Da die Schutzhülle 15 mit der Zeit von dem Fluid aufgelöst wird und die Hüllstärke der Schutzhülle 15 für die Sensorelemente 14 unterschiedlich ist, werden wiederum die Sensorelemente 14 nacheinander dem Fluid ausgesetzt. Auch diese Ausgestaltung des Indikatorpartikels 9 ermöglicht eine feine zeitliche Auflösung des Verlaufs des Istwerts beziehungsweise Istwertbereichs der Zustandsgröße, insbesondere entlang der jeweiligen Bahnlinie 11a, 11b oder 11c der Indikatorpartikel 9 (Langrangesche Beschreibung) oder der lokalen Istwerte der Zustandsgröße in der Fluidströmung (Eulersche Beschreibung), bevorzugt nachdem die Bahnlinien 11a, 11b und 11c der Indikatorpartikel 9 im Rahmen eines kalibrierten Models der Fluidströmung und der Partikelbewegung ermittelt wurden.

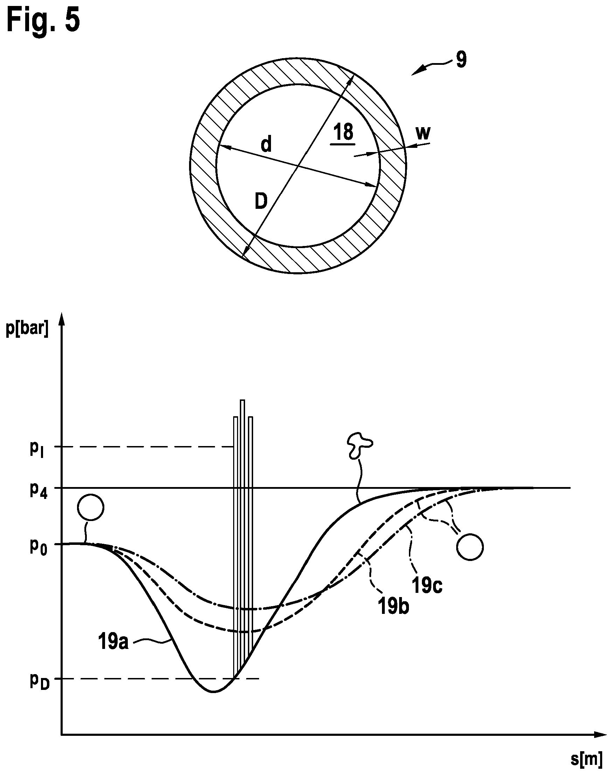

Die Figur 5 zeigt einen Indikatorpartikel 9 sowie ein Diagramm, in welchem ein Druck p über eine Strecke s der Bahnlinien 11a, 11b und 11c für die anhand der Figur 1 beschriebene fluidführende Einrichtung 1 aufgetragen ist. Der gezeigte Indikatorpartikel 9 steht stellvertretend für mehrere identische Indikatorpartikel 9. Diese weisen jeweils den Grundkörper 13 auf, der hohl und aus einem definierten Material gefertigt ist. Der Grundkörper 13 ist durch einen Außendurchmesser D, einen Hohlraum 18 mit einem Innendurchmesser d, einen Referenzdruck in dem Hohlraum 18 des Grundkörpers 13 und eine bestimmte Wandstärke w = D - d definiert. Ein Verlauf 19a zeigt den Verlauf des Drucks entlang der Bahnlinie 11a, ein Verlauf 19b entlang der Bahnlinie 11b und ein Verlauf 19c entlang der Bahnlinie 11c. Alle Bahnlinien beginnen beim Druck p₀ an der Einbringungsstelle 8 und enden beim Druck p₄ im Auslass 4. Für den der Bahnlinie 11a zugeordneten Indikatorpartikel 9 fällt der lokale Fluiddruck ausgehend vom dem Druck p₀ zunächst unter den Dampfdruck p_{D} des Fluids, sodass es zur Bildung von Kavitationsblasen kommt, die in Folge von Druckanstieg nach überschreiten des Dampfdrucks p_{D} implodieren und zu sehr hohen (über dem festgelegten Indikatorwert p_{I} liegenden) Druckspitzen im Fluid führen, welche dann eine bleibende Formänderung des Indikatorpartikel herbeirufen. Dies ist für die den Bahnlinien 11b und 11c zugeordneten Indikatorpartikel 9 nicht der Fall, sodass diese - wie angedeutet - ihre Gestalt beibehalten.

## Patentansprüche

1. Verfahren zum Ermitteln eines Istwerts und/oder eines Istwertbereichs wenigstens einer Zustandsgröße eines Fluids in einer Fluidströmung mittels wenigstens eines in das Fluid eingebrachten Indikatorpartikels (9), wobei der wenigstens eine Indikatorpartikel (9) für eine irreversible Eigenschaftsänderung einer Indikatoreigenschaft des Indikatorpartikels (9)
- bei Vorliegen eines bestimmten Indikatorwerts der wenigstens einen Zustandsgröße in der Fluidströmung, und/oder
- als eindeutige Funktion von dem Istwert bei Ablauf einer bestimmten Zeitspanne nach dem Einbringen des Indikatorpartikels (9) in das Fluid
vorgesehen und ausgebildet ist, wobei der Indikatorpartikel (9) an einer Erfassungsstelle erfasst, die Indikatoreigenschaft des Indikatorpartikels (9) ausgewertet und aus der Indikatoreigenschaft auf den Istwert und/oder den Istwertbereich der Zustandsgröße stromaufwärts der Erfassungsstelle geschlossen wird, **dadurch gekennzeichnet, dass**
- der Indikatorpartikel (9) für eine irreversible Eigenschaftsänderung einer Indikatoreigenschaft des Indikatorpartikels (9) bei Vorliegen eines bestimmten Indikatorwerts der wenigstens einen Zustandsgröße in der Fluidströmung vorgesehen und ausgebildet ist, wobei die Zustandsgröße eine Normalspannung und/oder eine Scherspannung des Fluids ist und der Indikatorpartikel (9) einen Grundkörper (13) mit einer einen Hohlraum einschließenden Partikelhülle aufweist, wobei in dem Hohlraum ein Referenzdruck vorliegt und die Partikelhülle dazu vorgesehen und ausgebildet ist, bei einem Abweichen der Normalspannung von dem Referenzdruck um eine bestimmte Druckdifferenz die Indikatoreigenschaft in Gestalt ihrer Form irreversibel zu ändern und/oder zu reißen, und/oder wobei die Partikelhülle dazu vorgesehen und ausgebildet ist, bei einem Abweichen der Scherspannung von einer Referenzspannung die Indikatoreigenschaft in Gestalt ihrer Form irreversibel zu ändern und/oder zu reißen, und/oder dass
- der Indikatorpartikel (9) für eine irreversible Eigenschaftsänderung einer Indikatoreigenschaft des Indikatorpartikels (9) als eindeutige Funktion von dem Istwert bei Ablauf einer bestimmten Zeitspanne nach einem Einbringen des Indikatorpartikels (9) in das Fluid vorgesehen und ausgebildet ist, wobei auf dem Grundkörper (13) ein die Indikatoreigenschaft bereitstellendes Sensormaterial vorliegt, das zustandsgrößensensibel ist, wobei der Grundkörper (13) von einer Schutzhülle (15) abgedeckt ist, sodass der Grundkörper beziehungsweise das Sensormaterial erst bei Ablauf der bestimmten Zeitspanne nach dem Einbringen in das Fluid dem Fluid ausgesetzt ist.

2. Verfahren nach Anspruch 1, **dadurch gekennzeichnet, dass** der wenigstens eine Indikatorpartikel (9) Teil einer Vielzahl von Indikatorpartikeln (9) ist, die in das Fluid eingebracht werden, wobei der Indikatorwert der Zustandsgröße für einen ersten Teil der Indikatorpartikel (9) einem ersten Indikatorwert und für einen zweiten Teil der Indikatorpartikel (9) einem zweiten Indikatorwert und/oder die Zeitspanne für den ersten Teil der Indikatorpartikel einer ersten Zeitspanne und für den zweiten Teil der Indikatorpartikel der zweiten Zeitspanne entspricht.

3. Verfahren nach dem vorhergehenden Anspruch, **dadurch gekennzeichnet, dass** der erste Teil der Indikatorpartikel (9) und der zweite Teil der Indikatorpartikel (9) gleichzeitig oder zeitversetzt und/oder an derselben Einbringungsstelle (8) oder an voneinander beabstandeten Einbringungsstellen (8) in das Fluid eingebracht werden, wobei der erste Teil mit einer unveränderlichen, von der jeweiligen Indikatoreigenschaft unabhängigen ersten Kennzeichnung und der zweite Teil mit einer unveränderlichen, von der jeweiligen Indikatoreigenschaft unabhängigen zweiten Kennzeichnung versehen wird.

4. Verfahren nach einem der vorhergehenden Ansprüche, **dadurch gekennzeichnet, dass** das Erfassen des wenigstens einen Indikatorpartikels (9) und das Auswerten der Indikatoreigenschaft berührungslos in dem Fluid oder nach einem Entnehmen des wenigstens einen Indikatorpartikels (9) aus dem Fluid erfolgt.

5. Verfahren nach einem der vorhergehenden Ansprüche, **dadurch gekennzeichnet, dass** bei Ausbleiben der Eigenschaftsänderung der Indikatorwert (9) verändert wird, bis die Eigenschaftsänderung auftritt, oder bei Auftreten der Eigenschaftsänderung der Indikatorwert verändert wird, bis die Eigenschaftsänderung ausbleibt, wobei aus einem ersten Indikatorwert des Indikatorwerts, bei welchem die Eigenschaftsänderung ausgeblieben ist, und aus einem zweiten Indikatorwert des Indikatorwerts, bei welchem die Eigenschaftsänderung aufgetreten ist, auf den Istwert und/oder den Istwertbereich der Zustandsgröße geschlossen wird.

6. Verfahren nach einem der vorhergehenden Ansprüche, **dadurch gekennzeichnet, dass** unter Verwendung eines Modells der Fluidströmung und der Bewegung eines Partikels in der Fluidströmung wenigstens ein Prädiktionswert für die Zustandsgröße, insbesondere entlang der Bahnlinie des wenigstens einen modellierten Indikatorpartikels, berechnet und mithilfe des wenigstens einen Indikatorpartikels (9) verifiziert wird, wobei bei einer Abweichung des Prädiktionswerts von dem mittels des wenigstens einen Indikatorpartikels (9) ermittelten Istwert und/oder Istwertbereich das Modell an den Istwert und/oder den Istwertbereich angeglichen wird.

7. Verfahren nach einem der vorhergehenden Ansprüche, **dadurch gekennzeichnet, dass** als Grundkörper (13) ein Grundkörper (13) verwendet wird, auf dem mehrere Sensorelemente (14) und/oder Sensorbereiche ausgebildet sind, wobei ein erster Teil der Sensorelemente (14) beziehungsweise Sensorbereiche aus dem Sensormaterial und ein zweiter Teil der Sensorelemente (14) beziehungsweise Sensorbereiche aus einem von dem Sensormaterial verschiedenen Sensormaterial besteht.

8. Verfahren nach Anspruch 7, **dadurch gekennzeichnet, dass** als Indikatorpartikel (9) ein Indikatorpartikel (9) verwendet wird, bei welchem die Sensorelemente (14) und/oder Sensorbereiche von der Schutzhülle (15) mit voneinander verschiedenen Hüllstärken abgedeckt sind.

9. Verfahren zum Betreiben einer fluidführenden Einrichtung (1), wobei ein Istwert und/oder ein Istwertbereich wenigstens einer Zustandsgröße des Fluids in einer in der Einrichtung (1) vorliegenden Fluidströmung mittels wenigstens eines in das Fluid eingebrachten Indikatorpartikels (9) unter Verwendung des Verfahrens nach einem oder mehreren der Ansprüche 1 bis 8 ermittelt wird.

10. Verfahren nach Anspruch 9, **dadurch gekennzeichnet, dass** bei einer Abweichung des Istwerts und/oder des Istwertbereichs von einem bereits zuvor ermittelten Istwert und/oder Istwertbereich und/oder von einem mithilfe eines Modells der Fluidströmung ermittelten Prädiktionswert und/oder Prädiktionswertbereich auf eine Fehlfunktion der fluidführenden Einrichtung (1) erkannt wird.

11. Einrichtung (7) zum Ermitteln eines Istwerts und/oder eines Istwertbereichs wenigstens einer Zustandsgröße eines Fluids in einer Fluidströmung mittels wenigstens eines in das Fluid eingebrachten Indikatorpartikels (9) unter Verwendung des Verfahrens nach einem oder mehreren der Ansprüche 1 bis 8.

## Claims

1. Method for determining an actual value and/or an actual value range of at least one state variable of a fluid in a fluid flow by means of at least one indicator particle (9) introduced into the fluid, wherein the at least one indicator particle (9) is provided and designed for an irreversible property change of an indicator property of the indicator particle (9)
- in the presence of a specific indicator value of the at least one state variable in the fluid flow, and/or
- as an unambiguous function of the actual value at the end of a certain period of time after the indicator particle (9) is introduced into the fluid,
wherein the indicator particle (9) is detected at a detection point, the indicator property of the indicator particle (9) is evaluated and the actual value and/or the actual value range of the state variable upstream of the detection point is inferred from the indicator property, **characterized in that**
- the indicator particle (9) is provided and designed for an irreversible change in properties of an indicator property of the indicator particle (9) in the presence of a specific indicator value of the at least one state variable in the fluid flow, wherein the state variable is a normal stress and/or a shear stress of the fluid and the indicator particle (9) has a base body (13) having a particle shell enclosing a cavity, wherein a reference pressure is present in the cavity and the particle shell is provided and designed to irreversibly change and/or break the indicator property in the form of its shape when the normal stress deviates from the reference pressure by a specific pressure difference, and/or wherein the particle shell is provided and designed to irreversibly change and/or break the indicator property in the form of its shape for this purpose when the shear stress deviates from a reference tension, and/or that
- the indicator particle (9) is provided and designed for an irreversible change in properties of an indicator property of the indicator particle (9) as an unambiguous function of the actual value at the end of a certain period of time after the indicator particle (9) has been introduced into the fluid, wherein the base body (13) is covered by a protective cover (15) so that the base body or the sensor material is only exposed to the fluid after the specific period of time has elapsed after being introduced into the fluid.

2. Method according to claim 1, **characterized in that** the at least one indicator particle (9) is part of a plurality of indicator particles (9), which are introduced into the fluid, wherein the indicator value of the state variable for a first part of the indicator particles (9) corresponds to a first indicator value and for a second part of the indicator particles (9) corresponds to a second indicator value and/or the period of time corresponds to a first period of time for the first part of the indicator particles and to the second period of time for the second part of the indicator particles.

3. Method according to the preceding claim, **characterized in that** the first part of the indicator particles (9) and the second part of the indicator particles (9) are introduced into the fluid simultaneously or in a time-delayed manner and/or at the same point of introduction (8) or at spaced-apart points of introduction (8), wherein the first part is provided with an unchangeable first identification independent of the respective indicator property and the second part is provided with an unchangeable second identification independent of the respective indicator property.

4. Method according to one of the preceding claims, **characterized in that** the at least one indicator particle (9) is detected and the indicator property is evaluated without direct contact in the fluid or after the at least one indicator particle (9) has been removed from the fluid.

5. Method according to one of the preceding claims, **characterized in that** if the property change does not occur, the indicator value (9) is changed until the property change occurs, or if the property change occurs, the indicator value is changed until the property change does not occur, wherein from a first indicator value of the indicator value, at which the property change did not occur, and from a second indicator value of the indicator value at which the property change occurred, the actual value and/or the actual value range of the state variable is inferred.

6. Method according to one of the preceding claims, **characterized in that** at least one prediction value for the state variable is calculated using a model of the fluid flow and the movement of a particle in the fluid flow, in particular along the trajectory of the at least one modeled indicator particle, and is verified using the at least one indicator particle (9), wherein the model is adjusted to the actual value and/or the actual value range if the prediction value deviates from the actual value and/or actual value range determined by means of the at least one indicator particle (9).

7. Method according to one of the preceding claims, **characterized in that** a base body (13) on which a plurality of sensor elements (14) and/or sensor regions are formed is used as base body (13), wherein a first part of the sensor elements (14) or sensor regions made of the sensor material and a second part of the sensor elements (14) or sensor regions consists of a sensor material that is different from the sensor material

8. Method according to claim 7, **characterized in that** an indicator particle (9), in which the sensor elements (14) and/or sensor regions are covered by the protective cover (15) with different cover thicknesses, is used as indicator particle (9).

9. Method for operating a fluid-guiding device (1), wherein an actual value and/or an actual value range of at least one state variable of the fluid in a fluid flow present in the device (1) is determined by means of at least one indicator particle (9) introduced into the fluid, using the method according to one or more of claims 1 to 8

10. Method according to claim 9, **characterized in that** if the actual value and/or the actual value range deviates from a previously determined actual value and/or actual value range and/or from a predicted value and/or predicted value range determined using a model of the fluid flow, a malfunction of the fluid-guiding device (1) is inferred.

11. Device (7) for determining an actual value and/or an actual value range of at least one state variable of a fluid in a fluid flow by means of at least one indicator particle (9) introduced into the fluid, using the method according to one or more of claims 1 to 8.

## Revendications

1. Procédé destiné à la détermination d'une valeur réelle et/ou d'une plage de valeurs réelles d'au moins une variable d'état d'un fluide dans un écoulement de fluide au moyen d'au moins une particule indicatrice (9) introduite dans le fluide, dans lequel l'au moins une particule indicatrice (9) prévue et configurée pour une modification de propriété irréversible d'une propriété indicatrice de la particule indicatrice (9)
- en présence d'une valeur indicatrice déterminée de l'au moins une variable d'état dans l'écoulement de fluide et/ou
- en tant que fonction univoque de la valeur réelle lors de l'expiration d'un délai déterminé après l'introduction de la particule indicatrice (9) dans le fluide,
dans lequel la particule indicatrice (9) acquiert au niveau d'un point de détection, la propriété indicatrice de la particule indicatrice (9) est évaluée et à partir de la propriété indicatrice il est conclu à la valeur réelle et/ou à la plage de valeurs réelles de la variable d'état en amont du point de détection, **caractérisé en ce que**
- la particule indicatrice (9) est prévue et configurée pour une modification de propriété irréversible d'une propriété indicatrice de la particule indicatrice (9) en présence d'une valeur indicatrice déterminée de l'au moins une variable d'état dans l'écoulement de fluide, dans lequel la variable d'état est une contrainte normale et/ou une contrainte de cisaillement du fluide et la particule indicatrice (9) présente un corps de base (13) avec une enveloppe de particule incorporant un espace creux, dans lequel une pression de référence est présente dans l'espace creux et l'enveloppe de particule est prévue et configurée pour, lors d'un écart entre la contrainte normale et la pression de référence d'une différence de pression déterminée modifier et/ou rompre de manière irréversible la propriété indicatrice sous forme de sa forme et/ou dans lequel l'enveloppe de particule est prévue et configurée pour modifier et/ou rompre de manière irréversible la propriété indicatrice sous forme de sa forme lors d'un écart entre la contrainte de cisaillement et une contrainte de référence, et/ou **en ce que**
- la particule indicatrice (9) est prévue et configurée pour une modification de propriété irréversible d'une propriété indicatrice de la particule indicatrice (9) en tant que fonction univoque de la valeur réelle lors de l'expiration d'un délai déterminé après une introduction de la particule indicatrice (9) dans le fluide, dans lequel sur le corps de base (13) un matériau de détection fournissant la propriété indicatrice est présent, qui est sensible aux variables d'état, dans lequel le corps de base (13) est recouvert par une enveloppe de protection (15), de sorte que le corps de base respectivement le matériau de détection n'est exposé au fluide que lors de l'expiration du délai déterminé après l'introduction dans le fluide.

2. Procédé selon la revendication 1, **caractérisé en ce que** l'au moins une particule indicatrice (9) fait partie d'une pluralité de particules indicatrices (9) qui sont introduites dans le fluide, dans lequel la valeur indicatrice de la variable d'état pour une première partie de la particule indicatrice (9) correspond à une première valeur indicatrice et pour une seconde partie de la particule indicatrice (9) correspond à une seconde valeur indicatrice et/ou le délai pour la première partie de la particule indicatrice correspond à un premier délai et pour la seconde partie de la particule indicatrice correspond au second délai.

3. Procédé selon la revendication précédente, **caractérisé en ce que** la première partie de la particule indicatrice (9) et la seconde partie de la particule indicatrice (9) sont introduites dans le fluide en même temps ou avec un décalage dans le temps et/ou au niveau du même point d'introduction (8) ou au niveau de points d'introduction (8) distants entre eux, dans lequel la première partie est dotée d'un premier repère non modifiable indépendant de la propriété indicatrice respective et la seconde partie est dotée d'un second repère non modifiable indépendant de la propriété indicatrice respective.

4. Procédé selon l'une quelconque des revendications précédentes, **caractérisé en ce que** la détection de l'au moins une particule indicatrice (9) et l'évaluation de la propriété indicatrice se font sans contact dans le fluide ou après un retrait de l'au moins une particule indicatrice (9) hors du fluide.

5. Procédé selon l'une quelconque des revendications précédentes, **caractérisé en ce que** lors de l'absence de la modification de propriété la valeur indicatrice (9) est modifiée jusqu'à ce que la modification de propriété apparaisse, ou lors de l'apparition de la modification de propriété la valeur indicatrice est modifiée jusqu'à ce que la modification de propriété soit absente, dans lequel à partir d'une première valeur indicatrice de la valeur indicatrice, pour laquelle la modification de propriété est absente et à partir d'une seconde valeur indicatrice de la valeur indicatrice pour laquelle la modification de propriété se produit, il est conclu à la valeur réelle et/ou à la plage de valeurs réelles de la variable d'état.

6. Procédé selon l'une quelconque des revendications précédentes, **caractérisé en ce que** en utilisant un modèle de l'écoulement de fluide et du mouvement d'une particule dans l'écoulement de fluide au moins une valeur de prédiction pour la variable d'état, en particulier le long de la ligne de parcours de l'au moins une particule indicatrice modélisée, est calculée et vérifiée à l'aide de l'au moins une particule indicatrice (9), dans lequel lors d'un écart entre la valeur de prédiction et la valeur réelle et/ou la plage de valeurs réelles déterminée(s) au moyen de l'au moins une particule indicatrice (9) le modèle est ajusté à la valeur réelle et/ou à la plage de valeurs réelles.

7. Procédé selon l'une quelconque des revendications précédentes, **caractérisé en ce que,** en tant que corps de base (13), un corps de base (13) est utilisé, sur lequel plusieurs éléments de détection (14) et/ou zones de détection sont configurés, dans lequel une première partie des éléments de détection (14) respectivement des zones de détection se composent du matériau de détection et une seconde partie des éléments de détection (14) respectivement des zones de détection se composent d'un matériau de détection différent du matériau de détection.

8. Procédé selon la revendication 7, **caractérisé en ce que,** en tant que particule indicatrice (9), une particule indicatrice (9) est utilisée, dans laquelle les éléments de détection (14) et/ou les zones de détection sont recouverts par l'enveloppe de protection (15) avec des épaisseurs d'enveloppe différentes les unes des autres.

9. Procédé destiné à l'exploitation d'un système de transport de fluide (1), dans lequel une valeur réelle et/ou une plage de valeurs réelles d'au moins une variable d'état du fluide sont déterminées dans un écoulement de fluide présent dans le système (1) au moyen d'au moins une particule indicatrice (9) introduite dans le fluide en utilisant le procédé selon l'une quelconque des revendications 1 à 8.

10. Procédé selon la revendication 9, **caractérisé en ce que** lors d'un écart entre la valeur réelle et/ou la plage de valeurs réelles et une valeur réelle et/ou une plage de valeurs réelles déjà déterminée(s) précédemment et/ou une valeur de prédiction et/ou une plage de valeurs de prédiction déterminée(s) à l'aide d'un modèle de l'écoulement de fluide un dysfonctionnement du système de transport de fluide (1) est reconnu.

11. Système (7) destiné à la détermination d'une valeur réelle et/ou d'une plage de valeurs réelles d'au moins une variable d'état d'un fluide dans un écoulement de fluide au moyen d'au moins une particule indicatrice (9) introduite dans le fluide en utilisant le procédé selon l'une quelconque ou plusieurs des revendications 1 à 8.
